# EUROPÄISCHE PATENTSCHRIFT

(11) **EP 2 976 975 B1**
(45) Veröffentlichungstag und Bekanntmachung des Hinweises auf die Patenterteilung: **31.01.2018**
(21) Anmeldenummer: 14178032.0
(22) Anmeldetag: 22.07.2014
(51) Int. Cl.: A47J 31/36, A47J 31/44, B65D 85/804

(54) **Getränkezubereitungssystem sowie Verfahren zum Erweitern einer von einer Getränkezubereitungsvorrichtung des Getränkezubereitungssystems beziehbaren Getränketypvielfalt**
Beverage preparation system and method for increasing the variety of beverages available from a beverage preparation device of the beverage preparation system
Système de préparation de boissons et procédé d'élargissement d'une variété de types de boissons pouvant être disposés par un dispositif de préparation de boissons du système de préparation de boissons

(43) Veröffentlichungstag der Anmeldung: 27.01.2016
(73) Patentinhaber: Eugster/Frismag AG, 8580 Amriswil (CH)
(72) Erfinder: Birke, Lars, 8274 Tägerwilen (CH)
(74) Vertreter: Patentanwälte Behrmann Wagner PartG mbB

(56) Entgegenhaltungen:
- EP-A1- 2 345 352
- WO-A1-2005/063091

## Beschreibung

Die vorliegende Erfindung betrifft ein Getränkezubereitungssystem gemäß dem Anspruch 1 und außerdem ein Verfahren zum Erweitern einer von einer Getränkezubereitungsvorrichtung zur Zubereitung bereitgestellten Anzahl von Getränketypen gemäß Anspruch 11.

Heutzutage sind Getränkezubereitungsvorrichtungen, insbesondere Kapselmaschinen, bekannt und finden weite Verwendung. In derartigen Getränkezubereitungsvorrichtungen sind Zubereitungsbetriebsmittel zum Zubereiten eines Getränks aus einem Getränkbasismaterial bereitgestellt. Diese Zubereitungsbetriebsmittel umfassen insbesondere eine Pumpe zum Fördern einer zur Getränkezubereitung zu verwendenden Flüssigkeit und eine Erhitzungsvorrichtung bzw. ein Durchlauferhitzer zum Erhitzen der Flüssigkeit. Der Betrieb der Zubereitungsbetriebsmittel wird durch eine in der Getränkezubereitungsvorrichtung aufgenommene Steuereinheit vorgenommen, und während einer Zubereitung eines Getränks steuert die Steuereinheit die Zubereitungsbetriebsmittel auf Grundlage eines in der Getränkezubereitungsvorrichtung gespeicherten Steuerungsdatensatzes. Damit die Getränkezubereitungsvorrichtung flexibel zur Zubereitung unterschiedlicher Getränketypen verwendet werden kann, ist die Getränkezubereitungsvorrichtung mit einem Steuerungsdatensatz-Speicher zum Speichern getränketypspezifischer Steuerungsdatensätze versehen, in dem eine Anzahl bei einer Getränkezubereitung nutzbarer Steuerungsdatensätze bereitgestellt sind. Für die Zubereitung eines Getränks eines spezifischen Getränketyps steuert die Steuereinheit die Zubereitungsbetriebsmittel auf Grundlage genau eines dieser nutzbaren Steuerungsdatensätze.

Nach einer Auslieferung einer derartigen Getränkezubereitungsvorrichtung mit mehreren darin zur Getränkezubereitung nutzbaren Steuerungsdatensätzen ist die mit dieser Getränkezubereitungsvorrichtung herstellbare bzw. beziehbare Getränketypvielfalt auf die durch die werkseitig eingespeicherten Steuerungsdatensätze beschränkt. Aufgrund der hohen Akzeptanz und der stetig ansteigenden Popularität derartiger Getränkezubereitungsvorrichtungen werden laufend neue Getränketypen entwickelt. Für eine optimale Zubereitung eines Getränks eines neuartigen Getränketyps ist es daher wünschenswert, eine bereits an einem Verbraucher ausgelieferte Getränkezubereitungsvorrichtung, um weitere Steuerungsdatensätze ergänzen zu können. Andernfalls wäre es für einen Verbraucher zur Herstellung eines neuartigen Produktes, beispielsweise einer speziellen Trinkschokolade, mit einer Getränkezubereitungsvorrichtung häufig erforderlich, zusätzlich zu seiner bereits in seinem Haushalt bereitstehenden Getränkezubereitungsvorrichtung eine weitere Getränkezubereitungsvorrichtung anzuschaffen, die zur Zubereitung eines Getränks des neuartigen Getränketyps fähig ist. Zur Vermeidung eines derartigen Nachteils ist es vorstellbar, dass die Getränkezubereitungsvorrichtung rekonfigurierbar bzw. anlernbar ausgestaltet ist. Da heutzutage bereits Getränkezubereitungsvorrichtungen existieren, die durch Auswertung eines an einer in die Getränkezubereitungsvorrichtung eingelegten Kapsel angebrachten Codemusters, beispielsweise ein Barcode, den der jeweiligen Kapsel zugeordneten Getränketyp erkennen können, bietet es sich zunächst an, das Hinzufügen eines weiteren zur Getränkezubereitung nutzbaren Steuerungsdatensatzes zu einer Getränkezubereitungsvorrichtung mittels einer in/an der Getränkezubereitungsvorrichtung angebrachten Codeausleseeinheit vorzunehmen, die fähig ist zum Auslesen einer Information eines graphischen Codemusters und zum Speichern der zugehörigen Information als einen Steuerungsdatensatz in dem Steuerungsdatensatz-Speicher der Getränkezubereitungsvorrichtung.

Bei mit einer derartigen Codeausleseeinheit versehenen Getränkezubereitungsvorrichtungen ist das graphische Codemuster üblicherweise auf einer in die Getränkezubereitungsvorrichtung einzulegenden Kapsel angebracht. Da das Auslesen des Codemusters in der Getränkezubereitungsvorrichtung erfolgt, die aufgrund der darin erfolgenden Getränkezubereitung häufig schmutzig, feucht und mit Dampf oder einer Flüssigkeit beschlagen ist, können aber nur relativ grobstrukturierte Codemuster ausgelesen werden. Aufgrund der erschwerten Auslesebedingungen derartiger Codes weisen diese zudem eine Coderedundanz zur Fehlererkennung und Fehlerkorrektur auf, was die in dem Code tatsächlich aufzunehmende Informationsmenge für Nutzdaten nochmals reduziert. Daher wurden und werden derartige Codeausleseeinheiten in Getränkezubereitungsvorrichtungen nicht zum Erweitern der Funktionalität der Getränkezubereitungsvorrichtung um weitere Getränketypen sondern nur zur Getränketyperkennung, beispielsweise anhand eines auf der eingelegten Kapsel angebrachten Barcodes, und der demgemäßen Auswahl eines in der Getränkezubereitungsvorrichtung bereits gespeicherten Steuerungsdatensatzes für eine Getränkezubereitung verwendet.

EP 2345352 A1 beschreibt ein Verfahren, um einem Benutzer einer Getränkezubereitungsvorrichtung eine Information bereitzustellen, die als ein Code auf einer Kapsel aufgebracht ist und vor der Zubereitung eines Getränks ausgelesen wird. Das Auslesen des Codes auf der Kapsel kann mit einem mit einer Kamera versehenen mobilen Endgerät vorgenommen werden. Die Information des ausgelesenen Codes wird dann dem Benutzer auf dem mobilen Endgerät angezeigt. Als anzuzeigende Information kann der Getränkenamen des Kapselgetränks oder das Haltbarkeitsdatum der Kapsel dargestellt werden. Außerdem kann der Code eine URL enthalten, so dass mittels eines Internetzugriffs auf die in dem Code enthaltene URL weitere Produktinformationen an das mobile Endgerät herunter geladen werden können. Die in dem Code enthaltene Information dient dazu, den Benutzer der Getränkezubereitungsvorrichtung bzw. den Getränkekonsument über das mit der Kapsel herstellbare Getränk besser zu informieren, beispielsweise in Form von das Getränk betreffenden Ernährungsinformationen oder Produktrezepten, die dem Benutzer angezeigt werden. Der Zweck des Internetzugriffs auf die aus dem Code ausgelesene URL ist, dass dieser Internetzugriff dem Benutzer ein Bestellen neuer Kapseln oder von Zubehör oder sogar eine Teilnahme an Wettwerben oder Werbeaktionen ermöglicht. Außerdem können dem Benutzer Anweisungen zum Zubereiten eines einzigen Mischgetränks, wie beispielsweise Cappuccino, aus mehreren Kapseln angezeigt werden. Die Informationen werden dem Benutzer vor dem Einlegen der mit dem Code versehenen Kapsel in die Getränkezubereitungsvorrichtung angezeigt. Außerdem wird beschrieben, dass das mobile Endgerät, das mit der Getränkezubereitungsvorrichtung Daten austauschen kann, auch zum Herunterladen einer Information von einem Server und zum anschließenden Aktualisieren der Getränkezubereitungsvorrichtung verwendet werden kann, um eine Brühparametrisierungssoftware, eine Benutzeranweisungssoftware, eine Software zum Anweisen des Benutzers, eine Dekodieranwendung und Kombination davon zu aktualisieren.

WO 2005/063091 A1 beschreibt ein Getränkezubereitungssystem mit einer über vorprogrammierte Brühprozessparameter steuerbaren Getränkezubereitungsvorrichtung, von denen ein Satz mittels Auslesen eines Codes für eine Zubereitung eines Getränks ausgewählt wird. Der Code ist in Form eines RFID-Transponders auf einer Kapselverpackung, also separat von den Kapseln, angebracht und kann kontaktlos ausgelesen werden, wenn die Kapselverpackung oder zumindest deren den RFID-Transponder tragender Abschnitt sich in der Nähe der Getränkezubereitungsvorrichtung befindet. Wenn der RFID-Transponder von der Getränkezubereitungsvorrichtung ausgelesen werden kann, erfolgt die Getränkezubereitung mit den dem ausgelesenen Code zugeordneten und vorprogrammierten Brühparametern. Andernfalls werden Standard-Brühparameter verwendet. Alternativ wird anstelle des RFID-Transponders ein Barcode-Träger verwendet, der in die Getränkezubereitungsvorrichtung eingelegt werden muss. Das Getränkezubereitungssystem umfasst keine separat von der Getränkezubereitungsvorrichtung bereitgestellte mobile Konfigurationsvorrichtung zum Auslesen des Codes, sondern der Code wird kontaktlos durch die Getränkezubereitungsvorrichtung selbst ausgelesen.

Die Aufgabe der vorliegenden Erfindung besteht daher in der Bereitstellung eines eine Getränkezubereitungsvorrichtung umfassenden Getränkezubereitungssystems zur Überwindung der oben geschilderten Probleme. Dabei zielt die vorliegende Erfindung besonders darauf ab, eine Getränkezubereitungsvorrichtung hinsichtlich der mit dieser zubereitbaren Getränketypvielfalt flexibel und aufwandsarm erweitern zu können, wobei zugleich die in der Getränkezubereitungsvorrichtung aufgenommenen Zubereitungsbetriebsmittel möglichst detailliert und präzise, also auf Grundlage eines Steuerungsdatensatzes mit einer großen Informationsmenge, angesteuert werden können. Außerdem ist die vorliegende Erfindung auf eine Verbesserung der Benutzerfreundlichkeit und eine Vereinfachung der Bedienung konventioneller Getränkezubereitungssysteme gerichtet.

Die Aufgabe der vorliegenden Erfindung wird durch ein Getränkezubereitungssystem mit den Merkmalen des unabhängigen Anspruchs 1 gelöst. Zusätzliche Merkmale weiterer vorteilhafter Ausführungsformen ergeben sich aus den abhängigen Ansprüchen. Die Aufgabe wird auch durch ein Verfahren zum Erweitern einer von einer Getränkezubereitungsvorrichtung zur Zubereitung bereitgestellten bzw. beziehbaren Anzahl von Getränketypen gemäß Anspruch 11 gelöst.

Das erfindungsgemäße Getränkezubereitungssystem umfasst eine Getränkezubereitungsvorrichtung und eine von der Getränkezubereitungsvorrichtung räumlich getrennt zu dieser bewegbar, also mobil, bereitgestellte Konfigurationsvorrichtung.

Die Getränkezubereitungsvorrichtung, die insbesondere eine Kapselmaschine ist, des erfindungsgemäßen Getränkezubereitungssystem ist ausgestaltet zum Zubereiten eines Getränks aus einem Getränkbasismaterial, das bevorzugt in einer Kapsel bzw. Kartusche aufgenommen ist, die in die Getränkezubereitungsvorrichtung eingelegt ist. Das Getränkbasismaterial kann eine Flüssigkeit und/oder ein Pulver sein. Bevorzugt ist das Getränkbasismaterial in einer Kapsel bzw. Kartusche untergebracht und darin luftdicht versiegelt. Das Getränkbasismaterial ist geeignet zum Herstellen von unterschiedlichen Getränken, wie beispielsweise - ohne Beschränkung darauf - Filterkaffee, Cappuccino, Tee, Trinkschokolade, Milch in flüssig oder aufgeschäumter Form, Suppe, Fruchtsaft, Limonade und/oder Softdrink. Unter dem Begriff der Kapsel wird für die vorliegende Erfindung jenes Behältnis verstanden, das zur Aufnahme eines Getränkbasismaterials zur Verwendung in einer erfindungsgemäßen Getränkezubereitungsvorrichtung geeignet ist. Eine Kapsel kann das Getränkbasismaterial hermetisch versiegelt umschließen, wie beispielsweise bei bekannten Aluminiumkapseln oder Plastikkapseln, oder unversiegelt mit offenen Poren umschließen, wie beispielsweise bei bekannten Kaffee-Pads.

Die erfindungsgemäße Getränkezubereitungsvorrichtung umfasst Zubereitungsbetriebsmittel zum Zubereiten eines Getränks aus einem Getränkbasismaterial, das in die Getränkezubereitungsvorrichtung eingebracht worden ist, bevorzugt mittels einer in die Getränkezubereitungsvorrichtung eingelegten Kapsel. Die Zubereitungsbetriebsmittel umfassen mindestens eine Pumpe sowie mindestens eine, insbesondere als Durchlauferhitzer ausgebildete, Erhitzungseinheit. Von einem Flüssigkeitstank der Getränkezubereitungsvorrichtung wird eine Flüssigkeit über eine Pumpe, der die Erhitzungsvorrichtung bzw. der Durchlauferhitzer vor- und/oder nachgeschaltet ist, in das Getränkbasismaterial eingebracht, und anschließend zur Getränkezubereitung, angereichert durch Bestandteile des Getränkbasismaterials, aus der Getränkezubereitungsvorrichtung zumindest teilweise ausgestoßen. Falls das Getränkbasismaterial in einer Kapsel aufgenommen ist, wird die Kapsel, damit die gepumpte Flüssigkeit die Kapsel bzw. das darin aufgenommene Getränkbasismaterial durchströmen kann, durch die Getränkezubereitungsvorrichtung entsprechend manipuliert, insbesondere angestochen bzw. durchstochen. Ferner umfasst die erfindungsgemäße Getränkezubereitungsvorrichtung einen Steuerungsdatensatz-Speicher zum Speichern, nicht nur für einen einmalig erfolgenden Getränkebezug sondern auch für nachfolgende Getränkebezüge, getränketypspezifischer Steuerungsdatensätze. Ferner ist der Steuerungsdatensatz-Speicher ausgebildet zum Bereitstellen einer Anzahl bei einer Getränkezubereitung nutzbarer Steuerungsdatensätze. Auch wenn eine Anzahl mehrerer nutzbarer Steuerungsdatensätze in dem Speicher bereitgestellt ist, wird zu einer bestimmten Zeit immer nur höchstens ein einzelner dieser Steuerungsdatensätze zur Steuerung der Zubereitungsbetriebsmittel verwendet.

Ferner umfasst die erfindungsgemäße Getränkezubereitungsvorrichtung eine Steuereinheit zum Steuern der Zubereitungsbetriebsmittel auf Grundlage eines der gespeicherten Steuerungsdatensätze aus der Anzahl nutzbarer Steuerungsdatensätze während einer Zubereitung eines Getränks. Die Steuereinheit kann durch einen programmierbaren Mikroprozessor oder einen programmierbaren Mikrocomputer oder durch eine anwendungsspezifische Schaltung verkörpert sein, wie es heutzutage für Getränkezubereitungsvorrichtungen üblich ist.

Der Begriff des Getränketyps bezeichnet einerseits einen Grundtyp eines Getränks, wie beispielsweise Filterkaffee, Espresso, Cappuccino, Tee, Trinkschokolade, Milch in flüssiger oder aufgeschäumter Form, Suppe, Fruchtsaft, Limonade und/oder Softdrink, berücksichtigt andererseits aber auch, dass für ein- und denselben spezifischen Grundtyp eines Getränks, beispielsweise Filterkaffee in Abhängigkeit des jeweiligen Getränkbasismaterials unterschiedliche Zubereitungsprozeduren erforderlich bzw. wünschenswert sind. Insbesondere wenn das Getränkbasismaterial in einer Kapsel aufgenommen ist, wird unter einem selben Getränktyp verstanden, dass in dem selben Getränketyp zugeordneten Kapseln die Beschaffenheit des Getränkbasismaterials in diesen Kapseln untereinander im Wesentlich identisch ist und/oder hinsichtlich einer Zubereitung für einen Konsumenten des Getränks nur unbemerkbar variiert. Entsprechendes gilt für ein Getränkbasismaterial, das ohne eine Kapsel in die Getränkezubereitungsvorrichtung eingebracht wird.

Unter dem Begriff eines Steuerungsdatensatzes werden Informationen verstanden, die die Steuereinheit zum getränketypspezifischen Steuern der Zubereitungsbetriebsmittel verwendet. Folglich ist die Steuereinheit auch ausgebildet zum Steuern der Zubereitungsbetriebsmittel während des Zubereitens eines Getränks auf Grundlage eines der ausgewählten getränketypspezifischen Steuerungsdatensätze.

Ferner weist die Getränkezubereitungsvorrichtung des erfindungsgemäßen Getränkezubereitungssystems eine Schnittstellen- und Aktualisierungseinheit auf zum Empfangen von Steuerungsdatensatz-Basisdaten, die von der mobilen Konfigurationsvorrichtung des erfindungsgemäßen Getränkezubereitungssystems und/oder einer externen Servervorrichtung, die beide räumlich von der Getränkezubereitungsvorrichtung und untereinander getrennt sind, mittels einer drahtgebundenen und/oder funkbasierten Datenübertragung gesendet worden sind, wobei die Steuerungsdatensatz-Basisdaten auf Grundlage eines von der mobilen Konfigurationsvorrichtung, insbesondere kontaktfrei, ausgelesenen Codemittels einer Codeträgervorrichtung erzeugt und/oder bereitgestellt worden sind. Die Codeträgervorrichtung ist dabei räumlich getrennt von der Getränkezubereitungsvorrichtung und der mobilen Konfigurationsvorrichtung. Ferner ist die Schnittstellen- und Aktualisierungseinheit der Getränkezubereitungsvorrichtung ausgebildet zum Hinzufügen, auf Grundlage der empfangenen Steuerungsdatensatz-Basisdaten, eines hinzuzufügenden Steuerungsdatensatzes zu der in dem Steuerungsdatensatz-Speicher bereitgestellten Anzahl der bei einer Getränkezubereitung nutzbaren Steuerungsdatensätze und/oder zum Aktualisieren, auf Grundlage der empfangenen Steuerungsdatensatz-Basisdaten, eines in dem Steuerungsdatensatz-Speicher bereits gespeicherten, zu aktualisierenden Steuerungsdatensatzes.

Die mobile Konfigurationsvorrichtung des erfindungsgemäßen Getränkezubereitungssystems umfasst eine Codemittelausleseeinheit zum Auslesen eines auf einer Codeträgervorrichtung angebrachten Codemittels und zum Gewinnen einer Steuerungsdatensatz-Codeinformation aus dem ausgelesenen Codemittel. Der Steuerungsdatensatz-Codeinformation sind ein in den Steuerungsdatensatz-Speicher der Getränkezubereitungsvorrichtung hinzuzufügender oder in dem Steuerungsdatensatz-Speicher zu aktualisierender Steuerungsdatensatz und als Ausgangspunkt zu dessen Bestimmung entsprechende Steuerungsdatensatz-Basisdaten zugeordnet.

Die Codeträgervorrichtung mit dem Codemittel befindet sich dabei bestimmungsgemäß für das Auslesen bevorzugt räumlich getrennt von der mobilen Konfigurationsvorrichtung. Das Codemittel kann als ein, bevorzugt zweidimensionales, Codemuster ausgebildet sein, das eines ist aus der Gruppe von einem Barcode, einem QR-Code, einem DataMatrix-Code, einem Semacode, einem Aztec-Code, einem Maxi-Code oder einem EZ-Code oder eine beliebige Kombination dieser Codes. Zum Auslesen des durch ein zweidimensionales Codemuster verkörperten Codemittels ist die Codemittelausleseeinheit zum optischen Erfassen und Auslesen des Codemusters ausgebildet. Das Codemittel kann auch durch einen RFID-Transponder verkörpert sein. Dann ist die Codemittelausleseeinheit alternativ oder zusätzlich ausgebildet zum funkbasierten Auslesen dieses Codemittels. Bevorzugt ist die Codemittelausleseeinheit zum kontaktfreien Auslesen der Codeträgervorrichtung bzw. des darauf angebrachten bzw. darin enthaltenen Codemittels ausgebildet.

Die Steuerungsdatensatz-Basisdaten sind zur Datenübertragung an die Getränkezubereitungsvorrichtung vorgesehen und dementsprechend ausgebildet. Die in der mobilen Konfigurationsvorrichtung und/oder einer externen Servervorrichtung bereitgestellten und an eine Getränkezubereitungsvorrichtung zu übertragenden Steuerungsdatensatz-Basisdaten können einen von der die Steuerungsdatensatz-Basisdaten empfangenden Getränkezubereitungsvorrichtung nutzbaren Steuerungsdatensatz umfassen. Alternativ können die Steuerungsdatensatz-Basisdaten Parameterbetriebswerte für die Zubereitungsbetriebsmittel umfassen, aus denen die diese Steuerungsdatensatz-Basisdaten empfangende Getränkezubereitungsvorrichtung einen nutzbaren Steuerungsdatensatz generiert und diesen in ihrem Steuerungsdatensatz-Speicher abspeichert. Es ist auch möglich, dass die an eine Getränkezubereitungsvorrichtung zu übertragenden jeweiligen Steuerungsdatensatz-Basisdaten keine unmittelbar zur Steuerung der Zubereitungsbetriebsmittel der Getränkezubereitungsvorrichtung einsetzbaren Daten enthalten, sondern andere Informationen, wie beispielsweise Serveradressdaten, einen Getränketypcode und/oder eine Information zur Spezifizierung und/oder Identifizierung der Getränkezubereitungsvorrichtung enthält, die die Getränkezubereitungsvorrichtung zum Abrufen eines Steuerungsdatensatzes von einer externen Servervorrichtung nutzen kann.

Ferner umfasst die mobile Konfigurationsvorrichtung des erfindungsgemäßen Getränkezubereitungssystems eine Schnittstelleneinheit zum drahtgebundenen oder funkbasierten Übertragen von Steuerungsdatensatz-Basisdaten, die der aus dem ausgelesenen Codemittel gewonnenen Steuerungsdatensatz-Codeinformation zugeordnet sind, an die Getränkezubereitungsvorrichtung.

Alternativ oder zusätzlich ist die Schnittstelleneinheit ausgebildet für ein drahtgebundene oder funkbasierte Datenübertragung an eine bzw. mit einer externen Servervorrichtung, damit die externe Servervorrichtung der Getränkezubereitungsvorrichtung Steuerungsdatensatz-Basisdaten bereitstellen kann, die der gewonnenen Steuerungsdatensatz-Codeinformation zugeordnet sind. Diese Datenübertragung zwischen der Schnittstelleneinheit der mobilen Konfigurationsvorrichtung und der externen Servervorrichtung hat den Zweck, dass die externe Servervorrichtung, auf Grundlage des von der mobilen Konfigurationsvorrichtung ausgelesenen Codemittels bzw. der darin enthaltenen Steuerungsdatensatz-Codeinformation, durch die von der mobilen Konfigurationsvorrichtung gesendeten Daten befähigt wird, der Getränkezubereitungsvorrichtung Steuerungsdatensatz-Basisdaten bereitzustellen, und zwar über eine zwischen der Getränkezubereitungsvorrichtung und der externen Servervorrichtung etablierten Datenverbindung. Durch diese Bereitstellung der Steuerungsdatensatz-Basisdaten für die Getränkezubereitungsvorrichtung durch die externe Servervorrichtung braucht keine direkt Datenübertragungsverbindung zwischen der Getränkezubereitungsvorrichtung und der mobilen Konfigurationsvorrichtung etabliert zu werden.

Die mobile Konfigurationsvorrichtung wird durch ein mobiles Endgerät bzw. Mobilgerät verkörpert, das beispielsweise ein Smartphone, ein Tablet-Computer, ein PDA (Personal Digital Assistant) oder ein tragbarer Computer bzw. ein Notebook oder Netbook ist, wobei diese Endgeräte entsprechend zum Auslesen des auf einer Codeträgervorrichtung angebrachten bzw. darin aufgenommenen Codemittels ausgebildet sind bzw. sein müssen. Besonders bevorzugt ist die mobile Konfigurationsvorrichtung durch ein Smartphone verkörpert, das zur Ausführung eines auf dem Smartphone ausgeführten Programms, auch App genannt, fähig ist, um die Funktionalität der Codemittelausleseeinheit und der Schnittstelleneinheit software-basiert zu realisieren. Dies ist besonders vorteilhaft, weil heutige Smartphones zum Auslesen optischer Codes, zum Speichern von Daten und zur Kommunikation über ein Nahbereichsnetzwerk und auch über ein Mobilfunknetzwerk fähig sind. Zudem ist üblicherweise in einem Smartphone auch eine zuvor erwähnte SIM-Karte aufgenommen, die eine eindeutige Identifizierung des Smartphones bzw. der mobilen Konfigurationsvorrichtung gegenüber der Getränkezubereitungsvorrichtung bzw. gegenüber einer externen Servervorrichtung ermöglicht. Die Verkörperung der mobilen Konfigurationsvorrichtung durch ein Smartphone ist außerdem besonders vorteilhaft, weil Smartphones heutzutage aus dem Alltag nicht mehr wegzudenken sind, nahezu jedermann ein Smartphone benutzen kann, und der Benutzer sich bereits an die Menüführung seines Smartphones gewöhnt hat und sich somit nicht an die Benutzeroberfläche eines möglichen Konfigurationsprogramms der Getränkezubereitungsvorrichtung gewöhnen muss.

Das erfindungsgemäße Getränkezubereitungssystem ermöglicht somit eine besonders einfache und sichere Erweiterung der von der Getränkezubereitungsvorrichtung realisierbaren Getränketypvielfalt. Anders als bei dem zuvor beschriebenen, konventionellen Ansatz zur Erweiterung der Getränketypvielfalt einer Getränkezubereitungsvorrichtung werden Daten eines hinzuzufügenden Steuerungsdatensatzes nicht durch die Getränkezubereitungsvorrichtung selbst von einem auf einer Codeträgervorrichtung angebrachten Codemittel, beispielsweise ein Barcode oder QR-Code, ausgelesen. Das Auslesen eines derartigen Codemusters erfolgt vielmehr mittels einer von der Getränkezubereitungsvorrichtung räumlich getrennten, mobilen Konfigurationsvorrichtung, die mit entsprechendem Auslesemitteln versehen ist. Somit braucht die erfindungsgemäße Getränkezubereitungsvorrichtung lediglich ausgebildet sein zum drahtgebundenen oder funkbasierten Empfangen von Steuerungsdatensatz-Basisdaten. Da die Getränkezubereitungsvorrichtung des erfindungsgemäßen Getränkezubereitungssystems keine optische Ausleseeinheit erfordert, fallen in dieser aufwändige, fehleranfällige und wartungsintensive - insbesondere bei einer optischen Realisierung - Codeauslesemittel weg. Außerdem entfällt die zuvor erwähnte, durch ein optisches Codemuster, das in der Getränkezubereitungsvorrichtung ausgelesen wird, vorgegebene Beschränkung auf eine geringe Informationsmenge zur Beschreibung eines hinzuzufügenden Steuerungsdatensatzes.

In einer erfindungsgemäßen Weiterbildung ist die Schnittstellen- und Aktualisierungseinheit der Getränkezubereitungsvorrichtung ausgebildet zum Hinzufügen eines hinzuzufügenden Steuerungsdatensatzes zu den nutzbaren Steuerungsdatensätze in dem Steuerungsdatensatz-Speicher, indem ein Steuerungsdatensatz, der bereits in dem Steuerungsdatensatz-Speicher gespeichert ist, aber nicht für eine Zubereitung eines Getränks nutzbar und somit für die Getränkezubereitung gesperrt ist, nutzbar gemacht wird. Dies kann beispielsweise dadurch realisiert werden, dass jedem Steuerungsdatensatz ein entsprechendes Flag zugeordnet ist, wobei das einem nutzbaren Steuerungsdatensatz zugeordnete Flag gesetzt ist, und das einem nicht-nutzbaren, also zur Nutzung gesperrten Steuerungsdatensatz zugeordnete Flag gelöscht ist (oder jeweils umgekehrt). Zusätzlich oder alternativ ist die Schnittstellen- und Aktualisierungseinheit ausgebildet zum Hinzufügen eines hinzuzufügenden Steuerungsdatensatzes zu der bereitgestellten Anzahl nutzbarer Steuerungsdatensätze mittels Schreiben des hinzuzufügenden, nutzbaren Steuerungsdatensatzes in den Steuerungsdatensatz-Speicher. Die Nutzbarmachung bereits gespeicherter Steuerungsdatensätze ermöglicht es, eine erfindungsgemäße Getränkezubereitungsvorrichtung werksmäßig mit einer großen Anzahl von Steuerungsdatensätzen zu versehen, die zunächst, so lange entsprechende Produkte noch nicht auf den Markt sind, nicht für den Benutzer freigeschaltet sind. Dies verhindert auf positive Weise, dass der Benutzer durch eine Bereitstellung von Getränketypen, für die es noch keine entsprechenden Produkte gibt, verwirrt wird oder einen für einen bestimmten Getränketyp nicht geeigneten oder suboptimalen Steuerungsdatensatz auswählt, was zu einem Getränk mangelhafter Qualität führen würde. Das Hinzufügen eines weiteren Steuerungsdatensatzes zu dem Steuerungsdatensatz-Speicher mittels Schreiben des nutzbaren Steuerungsdatensatzes in den Steuerungsdatensatz-Speicher ermöglicht es hingegen auf vorteilhafte Weise, die Getränkezubereitungsvorrichtung werkseitig zunächst nur mit einer geringen Anzahl gespeicherter Steuerungsdatensätze auszuliefern, wobei der Steuerungsdatensatz-Speicher für eine später vorzunehmende Aufnahme weiterer nutzbarer Steuerungsdatensätze ausgebildet bzw. konfiguriert ist.

Gemäß einer weiteren erfindungsgemäßen Ausführungsform ist die Schnittstellen- und Aktualisierungseinheit ausgebildet, den hinzuzufügenden oder zu aktualisierenden Steuerungsdatensatz aus den von der mobilen Konfigurationsvorrichtung empfangenen Steuerungsdatensatz-Basisdaten zu extrahieren, insbesondere dann wenn der hinzuzufügende oder zu aktualisierende Steuerungsdatensatz in Bit-Form direkt den empfangenen Steuerungsdatensatz-Basisdaten entnommen werden kann. Alternativ oder zusätzlich ist die Schnittstellen- und Aktualisierungseinheit gemäß der weiteren erfindungsgemäßen Ausführungsform ausgebildet zum Generieren des hinzuzufügenden oder zu aktualisierenden Steuerungsdatensatzes auf Grundlage der empfangenen Steuerungsdatensatz-Basisdaten. So kann die Schnittstellen- und Aktualisierungseinheit aus in einer generischen Form, also ohne Bezug zu einer speziellen Implementierung der Getränkezubereitungsvorrichtung, vorliegenden Steuerungsdatensatz-Basisdaten einen entsprechenden Steuerungsdatensatz generieren, der aus der in generischer Form übermittelten Information eine getränkezubereitungsvorrichtungs-spezifische Information macht bzw. erzeugt.

Alternativ oder zusätzlich kann die Schnittstellen- und Aktualisierungseinheit gemäß der weiteren erfindungsgemäßen Ausführungsform dazu ausgebildet sein, auf Grundlage der empfangenen Steuerungsdatensatz-Basisdaten den hinzuzufügenden oder zu aktualisierenden Steuerungsdatensatz, oder zumindest einen Teil bzw. einen Abschnitt davon, von einer externen Servervorrichtung herunterzuladen, die bevorzugt von der mobilen Konfigurationsvorrichtung unterschiedlich ist. In den von Getränkezubereitungsvorrichtung empfangenen Steuerungsdatensatz-Basisdaten ist dann beispielsweise eine Internetadresse, beispielsweise ein Uniform Resource Locator (URL), möglicherweise ergänzt um einen den Getränketyp oder abzurufenden Steuerungsdatensatz identifizierenden Zahlencode, spezifiziert bzw. aufgenommen. Die Schnittstellen- und Aktualisierungseinheit der erfindungsgemäßen Getränkezubereitungsvorrichtung etabliert dann eine internetbasierte Verbindung mit der durch die in den Steuerungsdatensatz-Basisdaten enthaltene Internetadresse spezifizierten externen Servervorrichtung oder mit einer fest vorgegebenen Servervorrichtung unter Angabe des den abzurufenden Steuerungsdatensatz identifizierenden Zahlencodes, ruft von dieser externen Servervorrichtung den hinzuzufügenden oder zu aktualisierenden Steuerungsdatensatz ab bzw. lädt diesen von der externen Servervorrichtung in den eigenen Steuerungsdatensatz-Speicher herunter.

Die Kommunikationsverbindungen bzw. Datenübertragungsverbindungen zwischen der Getränkezubereitungsvorrichtung und der externen Servervorrichtung, zwischen der mobilen Konfigurationsvorrichtung und der externen Servervorrichtung, und zwischen der mobilen Konfigurationsvorrichtung und der Getränkezubereitungsvorrichtung können drahtgebunden oder funkbasiert oder kombiniert drahtgebunden und funkbasiert erfolgen.

Die Schnittstellen- und Aktualisierungseinheit kann demgemäß ausgebildet sein für einen drahtgebundenen Datenaustausch mit der externen Servervorrichtung und/oder der mobilen Konfigurationsvorrichtung, beispielsweise indem die Schnittstellen- und Aktualisierungseinheit über eine Ethernet-LAN-Verbindung mit einem Router und darüber mit dem Internet verbunden ist. Alternativ oder zusätzlich kann die Schnittstellen- und Aktualisierungseinheit ausgebildet sein für einen funkbasierten Datenaustausch mit der externen Servervorrichtung und/oder der mobilen Konfigurationsvorrichtung, beispielsweise indem die Schnittstellen- und Aktualisierungseinheit via WLAN (Wireless Local Area Network) oder Bluetooth oder einer anderen Drahtlostechnologie mit einem funkbasierten Zugriffspunkt bzw. Access Point kommuniziert, der über eine drahtgebundene oder (mobil-)funkbasierte Internetverbindung mit der externen Servervorrichtung und/oder der mobilen Konfigurationsvorrichtung verbunden ist.

Alternativ oder zusätzlich kann die Schnittstellen- und Aktualisierungseinheit funkbasiert mit der mobilen Konfigurationsvorrichtung und/oder der externen Servervorrichtung eine Internetverbindung etablieren zum Herunterladen eines Steuerungsdatensatzes und ist dazu mit einem Mobilfunkmodul für GPRS, EDGE, HSDPA oder UMTS oder einem anderen Mobilfunkstandard zur Datenkommunikation versehen. Dieses Mobilfunkmodul ist zudem mit einer üblicherweise von Mobilfunk-Providern bereitgestellten Identifizierungskarte versehen, die bevorzugt eine übliche SIM-Karte (SIM: Subscriber Identity Module) ist. Dies ermöglicht eine eindeutige Identifizierung der Getränkezubereitungsvorrichtung, beispielsweise gegenüber einer die Steuerungsdatensätze verwaltenden externen Servervorrichtung oder der mobilen Konfigurationsvorrichtung, auf Grundlage einer in der SIM-Karte enthaltenen Getränkezubereitungsvorrichtung-eindeutigen Information. Die Schnittstellen- und Aktualisierungseinheit ist dann besonders bevorzugt dazu ausgebildet, in einer an eine externe Servervorrichtung übermittelten Anforderung eines Steuerungsdatensatzes auch eine in der SIM-Karte der Getränkezubereitungsvorrichtung enthaltene Information an die externe Servervorrichtung zu übermitteln, die der externen Servervorrichtung eine eindeutige Identifizierung der Getränkezubereitungsvorrichtung bzw. der in dieser aufgenommenen SIM-Karte ermöglicht. Die externe Servervorrichtung ist dann dementsprechend dazu ausgebildet, die übermittelte SIM-Karte-basierte Identifizierungsinformation dem angeforderten bzw. abgerufenen Steuerungsdatensatz in einer Datenbank zuzuordnen. Damit kann die externe Servervorrichtung in einer Datenbank nachhalten, ob eine bestimmte Getränkezubereitungsvorrichtung einen durch den Server bereitgestellten Steuerungsdatensatz überhaupt abgerufen hat bzw. wie oft sie einen jeweiligen Steuerungsdatensatz abgerufen hat. Dies ermöglicht einerseits eine Verifizierung der Zulässigkeit eines Abrufs eines Steuerungsdatensatzes und ermöglicht andererseits ein Erstellen einer Benutzungscharakteristik für die jeweilige Getränkezubereitungsvorrichtung bzw. die darin gespeicherten nutzbaren Steuerungsdatensätze.

Gemäß einer weiteren erfindungsgemäßen Ausführungsform ist die Schnittstellen- und Aktualisierungseinheit der Getränkezubereitungsvorrichtung ausgebildet zum Überschreiben, auf Grundlage der empfangenen Steuerungsdatensatz-Basisdaten, eines in dem Steuerungsdatensatz-Speicher bereits gespeicherten Steuerungsdatensatzes mit dem hinzuzufügenden Steuerungsdatensatz. Der zu überschreibende, bereits gespeicherte Steuerungsdatensatz kann ein von dem Benutzer der Getränkezubereitungsvorrichtung überhaupt nicht oder nur selten verwendeter Steuerungsdatensatz, ein nicht-nutzbarer Steuerungsdatensatz oder ein nutzbarer aber veralteter Steuerungsdatensatz sein, für den der Hersteller der Getränkezubereitungsvorrichtung oder des Getränkbasismaterials als Ersatz eine Weiterentwicklung vorgenommen hat. Durch das Überschreiben eines in dem Steuerungsdatensatz-Speicher gespeicherten Steuerungsdatensatzes mit einem neuen Steuerungsdatensatz kann der Steuerungsdatensatz-Speicher besonders effizient und ohne überdimensioniert vorgehaltenen Speicherraum genutzt werden. Durch automatisches Überschreiben eines von dem Benutzer überhaupt nicht oder nur sehr selten verwendeten Steuerungsdatensatzes zur Getränkeherstellung kann außerdem die dem Benutzer zur Verfügung stehende Getränketypvielfalt auf ein sinnvolles Ausmaß begrenzt werden.

Gemäß dem Getränkezubereitungssystem und dem Verfahren der vorliegenden Erfindung sind für zumindest einen Teil oder alle der nutzbaren Steuerungsdatensätze jeweilige Getränkebezugszähler bereitgestellt. Diese Getränkebezugszähler können in der Getränkezubereitungsvorrichtung bereitgestellt und durch die Steuereinheit realisiert sein. Zusätzlich oder alternativ können die Getränkebezugszähler oder ein Teil davon mittels einer Datenkommunikation, wie beispielsweise zuvor bezüglich der Datenübertragung zwischen der Getränkezubereitungsvorrichtung und einer externen Servervorrichtung beschrieben, mit einer externen Servervorrichtung betriebsfähig bereitgestellt sein. Im letzteren Fall werden dann die aktuellen Zählerstände der jeweiligen Getränkebezugszähler nicht in der Getränkezubereitungsvorrichtung selbst sondern extern in der externen Servervorrichtung nachgehalten bzw. verwaltet. Außerdem ist die Schnittstellen- und Aktualisierungseinheit ausgebildet zum Extrahieren eines Getränkebezugzähler-Grenzwertes, der dem hinzuzufügenden oder zu aktualisierenden Steuerungsdatensatz zugeordnet ist, aus den empfangenen Steuerungsdatensatz-Basisdaten für diesen Steuerungsdatensatz. Der Getränkebezugszähler-Grenzwert legt die maximale Anzahl zulässiger Getränkebezüge des dem Steuerungsdatensatz zugeordneten Getränketyps fest. Demgemäß ist die Steuereinheit somit ausgebildet, den hinzugefügten oder aktualisierten Steuerungsdatensatz in dem Steuerungsdatensatz-Speicher unnutzbar zu machen, beispielsweise durch Löschen des zuvor erwähnten, dem jeweiligen Steuerungsdatensatz zugeordneten Flags, wenn der dem Steuerungsdatensatz zugeordnete Getränkebezugszähler den jeweiligen Getränkebezugszähler-Grenzwert erreicht oder überschreitet (für ein Hochzählen des Getränkebezugszählers mit fortschreitenden Getränkebezügen) oder unterschreitet (für ein Runterzählen des Getränkebezugszählers). Der Getränkebezugszähler hält dabei die Anzahl der dem hinzugefügten Steuerungsdatensatz zugeordneten und durch die Getränkezubereitungsvorrichtung hergestellten bzw. bezogenen Getränke nach und wird beispielsweise durch die Steuereinheit aktualisiert. Damit kann besonders wirkungsvoll erreicht werden, dass die Getränkezubereitungsvorrichtung nicht für alle Ewigkeiten zu der Zubereitung eines Getränketyps fähig ist, der beispielsweise nur zeitlich oder in der Stückzahl limitiert vertrieben wird.

Gemäß einer weiteren vorteilhaften Ausführungsform ist die Steuereinheit ausgebildet zum Steuern der Zubereitungsbetriebsmittel auf Grundlage in einer fixierten Abfolge aufeinander folgender Sequenzschritte eines Anfeuchtens (so genanntes Pre-Wetting) des Getränkbasismaterials durch die von der Pumpe geförderte und die Kapsel eingebrachte Flüssigkeit, eines Pausierens bzw. Anhaltens des Pumpvorgangs, eines anschließenden Brühens bzw. Durchmischens, und eines Ausstoßens des zubereiteten Getränks. Ein nutzbarer Steuerungsdatensatz umfasst dann den jeweiligen Sequenzschritten zugeordnete Variablenwert-Datensätze für Betriebsparameter, wie beispielsweise ein Temperaturwert, ein Druckwert, ein Mengenwert der von der Pumpe durch den Durchlauferhitzer in die Kapsel einzubringenden Flüssigkeit. Für konkrete Beispiele derartiger Sequenzschritte und Betriebsparameter wird beispielhaft auf die Patentschrift EP 1 440 640 B1 verwiesen. Die den jeweiligen Sequenzschritten zugeordnete Variablenwert-Datensätze (beispielsweise eine Pausendauer für den Sequenzschritt des Pausierens, oder eine Temperatur und eine Fördermenge einer während des Sequenzschrittes des Brühens zu pumpenden Flüssigkeit) können dann durch Auslesen des Codemittels der Codeträgervorrichtung zum Bilden eines in dem Steuerungsdatensatz abzuspeichernden, nutzbaren Steuerungsdatensatzes verwendet werden.

Wenn die Steuereinheit ausgebildet ist zum Verarbeiten von Programmcodes zur Steuerung der Zubereitungsbetriebsmittel, kann ein nutzbarer Steuerungsdatensatz alternativ durch einen von der Steuereinheit verarbeitungsfähigen Programmcode verkörpert sein. Dann kann die Steuereinheit eine sehr präzise und zugleich flexibel programmierbare Steuerung der Zubereitungsbetriebsmittel während einer Getränkezubereitung vornehmen. Besonders bevorzugt ist die Steuereinheit der Getränkezubereitungsvorrichtung zur einer Verarbeitung des einen Steuerungsdatensatz darstellenden Programmcodes derart ausgebildet, dass mindestens eine für die Getränkezubereitung eingesetzte Pumpe, als Bestandteil der Zubereitungsbetriebsmittel, der Getränkezubereitungsvorrichtung während der Zubereitung eines einzigen Getränks beliebig oft an- und ausgeschaltet bzw. getaktet betrieben werden kann. Dies ermöglicht eine optimierte Getränkezubereitung. Noch bevorzugter ist die Steuereinheit so ausgebildet, dass sie, gemäß einer Verarbeitung eines einen Steuerungsdatensatz darstellenden Programmcodes, mindestens eine Pumpe der Zubereitungsbetriebsmittel mit einer, bevorzugt zeitveränderlichen, Phasenanschnitt- oder Phasenabschnittansteuerung und/oder mit einer reduzierten bzw. zeitvariabel gesteuerten Spannung während der Zubereitung eines einzigen Getränks betreiben kann.

Gemäß einer weiteren vorteilhaften Ausführungsform ist die Getränkezubereitungsvorrichtung als eine Kapselmaschine ausgebildet und umfasst demgemäß eine Kapselaufnahmeeinheit zum Aufnehmen einer in die Getränkezubereitungsvorrichtung eingelegten, mit einem Getränkbasismaterial gefüllten Kapsel. Außerdem umfasst diese Getränkezubereitungsvorrichtung eine Getränketypcode-Verwertungseinheit zum Erkennen eines der eingelegten Kapsel zugeordneten Getränketyps bzw. bei der Getränkezubereitung für die Steuerung der Zubereitungsbetriebsmittel zu verwendenden Steuerungsdatensatzes auf Grundlage eines an bzw. in der Kapsel angebrachten Kapselcodemittels, das beispielsweise ein Barcode oder ein anderes zweidimensionales Codemuster oder ein zum Auslesen eines Codes betriebsfähiger RFID-Transponder ist. Die Getränketypcode-Verwertungseinheit wählt dann den Steuerungsdatensatz, der dem erkannten Getränketyp zugeordnet ist, für eine Zubereitung eines Getränks aus der eingelegten Kapsel aus, wobei dies bevorzugt ohne Benutzerinteraktion, also automatisch erfolgt. Besonderes bevorzugt ist diese Getränketypcode-Verwertungseinheit auch ausgebildet zum Veranlassen, dass nach dem Erkennen des der eingelegten Kapsel zugeordneten Getränketyps bzw. Steuerungsdatensatzes automatisch, also ohne Benutzerinteraktion oder ohne Benutzerbestätigung, die Zubereitung des Getränks aus der eingelegten Kapsel mittels Betreiben der Zubereitungsbetriebsmittel gestartet wird. Das zuvor erwähnte, auf der Kapsel angebrachte Kapselcodemittel kann aber nicht zum Hinzufügen oder Aktualisieren eines Steuerungsdatensatzes in der Getränkezubereitungsvorrichtung verwendet werden.

Gemäß einer zweiten Alternative sind hingegen die Zubereitungsbetriebsmittel mit einer Mahleinheit zum Mahlen eines in die Getränkezubereitungsvorrichtung eingebrachten Getränkbasismaterials versehen, wobei die Mahleinheit auf Grundlage eines Steuerungsdatensatzes durch die Steuereinheit gesteuert wird. Bevorzugt ist in diesem Fall die Getränkezubereitungsvorrichtung als ein so genannter Vollautomat ausgebildet. In der Mahleinheit, als Bestandteil der Zubereitungsbetriebsmittel, wird ein Getränkrohmaterial, insbesondere Kaffeebohnen, gemäß dem ausgewählten Steuerungsdatensatz für eine vorbestimmte Zeitdauer gemahlen, und anschließend wird eine gemäß dem ausgewählten Steuerungsdatensatz vorbestimmte Flüssigkeitsmenge mit einer vorbestimmten Temperatur durch das gemahlene Getränkbasismaterial, insbesondere ein Kaffeemehl, geleitet, um einen Brühvorgang zu bewirken bzw. durchzuführen. Damit der Benutzer einen Getränketyp und somit den zur Steuerung der Zubereitungsbetriebsmittel durch die Steuereinheit zu verwendenden Steuerungsdatensatz auswählen kann, ist die als Vollautomat ausgebildete Getränkezubereitungsvorrichtung gemäß der zweiten Alternative mit einer Benutzerschnittstelle zum Auswählen eines Getränketyps durch den Benutzer versehen. Die Benutzerschnittstelle ermöglicht dem Benutzer ein Auswählen eines Getränketyps aus der Menge der Getränketypen, denen in dem Steuerungsdatensatz-Speicher ein nutzbarer Steuerungsdatensatz zugeordnet ist.

In einer erfindungsgemäßen Weiterbildung der mobilen Konfigurationsvorrichtung, als Komponente des erfindungsgemäßen Getränkezubereitungssystems, kann die mobile Konfigurationsvorrichtung eine Transformation der gewonnenen Steuerungsdatensatz-Codeinformation in die zugeordneten Steuerungsdatensatz-Basisdaten vornehmen. Alternativ oder zusätzlich beschafft die mobile Konfigurationsvorrichtung die Steuerungsdatensatz-Basisdaten, indem sie diese auf Grundlage der gewonnenen Steuerungsdaten-Codeinformation von einer in der mobilen Konfigurationsvorrichtung bereitgestellten Datenbank, also durch eine interne Kommunikation innerhalb der mobilen Konfigurationsvorrichtung, abruft. Alternativ oder zusätzlich beschafft die mobile Konfigurationsvorrichtung die Steuerungsdatensatz-Basisdaten, indem sie die Steuerungsdatensatz-Basisdaten von einer externen Servervorrichtung, genauer genommen von einer in der externen Servervorrichtung für einen Datenabruf durch die mobile Konfigurationsvorrichtung bereitgestellten Datenbank, abruft. Für die dazu erforderliche Datenübertragung mit der externen Servervorrichtung ist die mobile Konfigurationsvorrichtung ferner mit einer Schnittstelleneinheit zur Datenübertragung mit einer externen Servervorrichtung versehen. Für die konkrete Ausgestaltung dieser Schnittstelleneinheit kann jede der Übertragungstechnologien verwendet werden, die zuvor hinsichtlich der Schnittstellen- und Aktualisierungseinheit der Getränkezubereitungsvorrichtung aufgeführt wurden. Besonders bevorzugt ist die Schnittstelleneinheit zur Datenübertragung mit einer externen Servervorrichtung ausgebildet durch ein Mobilfunkmodul für GPRS, EDGE, HSDPA, UMTS oder einem anderen Mobilfunkstandard zur internetbasierten bzw. internetprotokollbasierten Datenkommunikation. Die mobile Konfigurationsvorrichtung kann sich dann gegenüber der externen Servervorrichtung auf Grundlage der in der mobilen Konfigurationsvorrichtung eingelegten SIM-Karte bzw. einer darin aufgenommenen Information, eindeutig identifizieren, wie zuvor bezüglich des Mobilfunkmoduls der Schnittstellen- und Aktualisierungseinheit der Getränkezubereitungsvorrichtung erläutert. Diese Ausführungsform wird besonders bevorzugt, da zur Bereitstellung der Funktionalität der mobilen Konfigurationsvorrichtung aufgrund der in der externen Servervorrichtung betriebenen Datenbank nur ein geringes Speichervolumen in der mobilen Konfigurationsvorrichtung benötigt wird.

Außerdem kann in der mobilen Konfigurationsvorrichtung eine Information für eine eindeutige Identifizierung der in ihrer Getränketypvielfalt zu erweiternden Getränkezubereitungsvorrichtung, beispielsweise eine zuvor erwähnte Information aus einer SIM-Karte eines Mobilfunkmoduls der Getränkezubereitungsvorrichtung, hinterlegt sein, und diese die Getränkezubereitungsvorrichtung identifizierende Information kann von der mobilen Konfigurationsvorrichtung zusammen mit der gewonnenen Steuerungsdatensatz-Codeinformation an die externe Servervorrichtung übermittelt werden, die für einer Bereitstellung, für die Getränkezubereitungsvorrichtung, von den der gewonnenen Steuerungsdatensatz-Codeinformation zugeordneten Steuerungsdatensatz-Basisdaten vorgesehen ist.

Gemäß einer erfindungsgemäßen Weiterbildung umfasst das Getränkezubereitungssystem ferner eine externe Servervorrichtung mit einer Datenbank mit darin gespeicherten Steuerungsdatensatz-Basisdaten für eine drahtgebundene oder funkbasierte Datenübertragung, auf Grundlage einer gewonnenen Steuerungsdatensatz-Codeinformation, an die mobile Konfigurationsvorrichtung und/oder an die Getränkezubereitungsvorrichtung.

Gemäß noch einer erfindungsgemäßen Weiterbildung umfasst das Getränkezubereitungssystem ferner eine externe Servervorrichtung mit einer Datenbank mit darin gespeicherten Steuerungsdatensatz-Basisdaten für eine drahtgebundene oder funkbasierte Datenübertragung an die Getränkezubereitungsvorrichtung. Die externe Servervorrichtung ist dann ausgebildet zum Bereitstellen, auf Grundlage einer mittels einer drahtgebundenen oder funkbasierten Datenübertragung von der mobilen Konfigurationsvorrichtung an die externe Servervorrichtung übertragenen Steuerungsdatensatz-Codeinformation bzw. zugeordneter Steuerungsdatensatz-Basisdaten sowie bevorzugt einer Information zur Spezifizierung und/oder Identifizierung der Getränkezubereitungsvorrichtung, von den zugeordneten Steuerungsdatensatz-Basisdaten und zum drahtgebundenen oder funkbasierten Übertragen, bevorzugt initiiert durch die externe Servervorrichtung, der Steuerungsdatensatz-Basisdaten an die, bevorzugt spezifizierte und/oder identifizierte, Getränkezubereitungsvorrichtung.

Außerdem umfasst die vorliegende Erfindung eine Codeträgervorrichtung mit einem Codemittel, das von einer mobilen Konfigurationsvorrichtung des erfindungsgemäßen Getränkezubereitungssystems zum Gewinnen einer Steuerungsdatensatz-Codeinformation auslesbar ist und ausgebildet ist als ein optisch auslesbares Codemuster oder durch einen funkbasierten, code-auslesbaren RFID-Transponder.

Besonders bevorzugt wird die Codeträgervorrichtung mit dem Codemittel, das zum Auslesen durch die mobile Konfigurationsvorrichtung ausgebildet ist, mit mindestens einer in einer Getränkezubereitungsvorrichtung des erfindungsgemäßen Getränkezubereitungssystems einlegbaren, mit einem Getränkbasismaterial gefüllten Kapsel als eine Gruppierung von Teilen bereitgestellt. Dabei werden die Codeträgervorrichtung mit dem Codemittel und die mindestens eine Kapsel als eine Gruppierung von Teilen bereitgestellt, ohne dass die Codeträgervorrichtung und/oder das Codemittel an der mindestens einen Kapsel angebracht. Damit weicht das zugrunde liegende erfinderische Konzept überraschend von den bekannten Konzepten von mit Codemitteln versehenen Kapseln ab. Dies ermöglicht auf besonders vorteilhafte Weise das Hinzufügen eines Steuerungsdatensatzes in eine Getränkezubereitungsvorrichtung gemäß dem Konzept der vorliegenden Erfindung. Die erfindungsgemäße Gruppierung der Codeträgervorrichtung mit dem Codemittel und mindestens einer mit einem Getränkbasismaterial gefüllten Kapsel wird besonders bevorzugt durch mehrere Kapseln verkörpert, die gemeinsam von einem Verpackungsmaterial umschlossen sind, das die Codeträgervorrichtung darstellt, wobei auf dem Verpackungsmaterial bzw. der Codeträgervorrichtung ein zweidimensionales graphisches Codemuster aufgedruckt ist und/oder ein RFID-Transponder als funkbasiert auszulesendes Codemittel bereitgestellt ist. Damit das als RFID-Transponder ausgebildete Codemittel durch die mobile Konfigurationsvorrichtung ausgelesen werden kann, muss die mobile Konfigurationsvorrichtung selbstverständlich zum Auslesen eines RFID-Transponders fähig sein. Besonders bevorzugt enthält das Codemittel eine Information über die Anzahl der in der als Verpackungsmaterial ausgebildeten Codeträgervorrichtung aufgenommenen Kapseln. Diese Information kann dann zum Festlegen des zuvor erwähnten, dem durch das Codemittel spezifizierten Steuerungsdatensatz zugeordneten Getränkebezugzähler-Grenzwertes verwendet werden.

Ferner umfasst die Erfindung ein Verfahren zum Erweitern einer von einer Getränkezubereitungsvorrichtung eines erfindungsgemäßen Getränkezubereitungssystems zur Zubereitung bereitgestellten Anzahl von Getränketypen bzw. der Getränketypenvielfalt. Bei dem Verfahren wird zunächst ein Codemittel einer zuvor beschriebenen Codeträgervorrichtung optisch oder funkbasiert durch eine mobile Konfigurationsvorrichtung eines erfindungsgemäßen Getränkezubereitungssystems ausgelesen und anschließend wird aus dem ausgelesenen Codemittel durch die mobile Konfigurationsvorrichtung eine Steuerdatensatz-Codeinformation gewonnen. Dieser gewonnen Steuerdatensatz-Codeinformation sind ein in den Steuerungsdatensatz-Speicher der Getränkezubereitungsvorrichtung hinzuzufügender oder zu aktualisierender Steuerungsdatensatz bzw. diesem entsprechende Steuerungsdatensatz-Basisdaten zugeordnet. Die zugeordneten Steuerungsdatensatz-Basisdaten werden von der mobilen Konfigurationsvorrichtung mittels einer drahtgebundenen oder einer funkbasierten Datenübertragung, wie zuvor mehrfach erwähnt, an die Getränkezubereitungsvorrichtung gesendet bzw. übertragen.

Alternativ oder zusätzlich wird eine Bereitstellung, durch die externe Servervorrichtung für die Getränkezubereitungsvorrichtung, von den der gewonnenen Steuerungsdatensatz-Codeinformation zugeordneten Steuerungsdatensatz-Basisdaten bewirkt. Dazu wird drahtgebunden oder funkbasiert eine Information, beispielsweise die Steuerungsdatensatz-Codeinformation, die zugeordneten Steuerungsdatensatz-Basisdaten und eine Information zur Identifizierung der hinsichtlich der Getränkevielfalt zu erweiternden Getränkezubereitungsvorrichtung, von der mobilen Konfigurationsvorrichtung an die externe Servervorrichtung mittels einer zwischen diesen etablierten Datenübertragungsverbindung übertragen. Anschließend erfolgt ein drahtgebundenes oder funkbasiertes Übertragen der Steuerungsdatensatz-Basisdaten von der externen Servervorrichtung and die Getränkezubereitungsvorrichtung.

In der Getränkezubereitungsvorrichtung werden die von der mobilen Konfigurationsvorrichtung oder der externen Servervorrichtung gesendeten Steuerungsdatensatz-Basisdaten empfangen. Auf Grundlage der empfangenen Steuerungsdatensatz-Basisdaten erfolgt dann durch die Getränkezubereitungsvorrichtung ein Hinzufügen eines hinzuzufügenden Steuerungsdatensatzes zu der durch die Getränkezubereitungsvorrichtung bereitgestellten Anzahl bei einer Getränkezubereitung nutzbarer Steuerungsdatensätze. Alternativ oder zusätzlich erfolgt ein Aktualisieren, auf Grundlage der empfangenen Steuerungsdatensatz-Basisdaten, eines in der Getränkezubereitungsvorrichtung bereits gespeicherten, nun zu aktualisierenden Steuerungsdatensatzes.

Gemäß einer erfindungsgemäßen Weiterbildung des Verfahrens umfasst dieses einen weiteren Schritt zum Beschaffen der der gewonnenen Steuerungsdatensatz-Codeinformation zugeordneten Steuerungsdatensatz-Basisdaten durch ein Transformieren der gewonnenen Steuerungsdatensatz-Codeinformation in die Steuerungsdatensatz-Basisdaten. Besonders bevorzugt stellen dabei die zugeordneten Steuerungsdatensatz-Basisdaten eine Untermenge der Steuerungsdatensatz-Codeinformation dar. Alternativ oder zusätzlich erfolgt das Beschaffen der Steuerungsdatensatz-Basisdaten durch ein Abrufen, auf Grundlage der gewonnenen Steuerungsdatensatz-Codeinformation, einer in der mobilen Konfigurationsvorrichtung bereitgestellten Datenbank oder durch ein Abrufen einer Datenbank, die in einer externen Servervorrichtung bereitgestellt ist, auf die die mobile Konfigurationsvorrichtung über eine drahtgebundene oder funkbasierte Datenverbindung zugreift.

In einer erfindungsgemäßen Weiterbildung des Verfahrens umfasst dieses einen weiteren Schritt zum Vorsehen einer externen Servervorrichtung mit einer Datenbank mit darin gespeicherten Steuerungsdatensatz-Basisdaten für eine drahtgebundene oder funkbasierte Datenübertragung an die Getränkezubereitungsvorrichtung, und einen weiteren Schritt zum Bereitstellen, durch die externe Servervorrichtung, auf Grundlage einer mittels einer drahtgebundenen oder funkbasierten Datenübertragung von der mobilen Konfigurationsvorrichtung an die externe Servervorrichtung übertragenen Steuerungsdatensatz-Codeinformation bzw. zugeordneter Steuerungsdatensatz-Basisdaten sowie bevorzugt einer Information zur Spezifizierung und/oder Identifizierung der Getränkezubereitungsvorrichtung, beispielsweise die zuvor erwähnte eindeutige Information aus einer SIM-Karte der Getränkezubereitungsvorrichtung, von den zugeordneten Steuerungsdatensatz-Basisdaten und zum drahtgebundenen oder funkbasierten Übertragen, was besonders vorteilhaft durch die externe Servervorrichtung initiiert wird, der Steuerungsdatensatz-Basisdaten an die spezifizierte und/oder identifizierte Getränkezubereitungsvorrichtung. Somit kann die externe Servervorrichtung von der mobilen Konfigurationsvorrichtung, auf Grundlage des ausgelesenen Codemittels und der daraus gewonnenen Steuerungsdatensatz-Codeinformation sowie einer Information, die die Getränkezubereitungsvorrichtung spezifiziert, die mit einem der gewonnenen Steuerungsdatensatz-Codeinformation zugeordneten nutzbaren Steuerungsdatensatz erweitert werden soll, instruiert werden, der spezifizierten Getränkezubereitungsvorrichtung den der gewonnenen Steuerungsdatensatz-Codeinformation zugeordneten Steuerungsdatensatz zur Verfügung zu stellen. In besonders vorteilhafter Weise initiiert die externe Servervorrichtung dazu die Etablierung einer Datenübertragungsverbindung, beispielsweise mobilfunkbasiert, wenn die Getränkezubereitungsvorrichtung basierend auf der in ihrer SIM-Karte ihres Mobilkfunkmoduls enthaltenen eindeutigen Telefonnummer spezifiziert ist, und überträgt den Steuerungsdatensatz über die etablierte Mobilfunkverbindung an die spezifizierte Getränkezubereitungsvorrichtung.

Im Folgenden werden beispielhafte Ausführungsformen der Erfindung anhand der beigefügten Figuren erläutert, in denen
- Fig. 1: eine Ausführungsform einer erfindungsgemäßen Gruppierung einer mit einem Codemittel versehenen Codeträgervorrichtung und einer Mehrzahl in eine Getränkezubereitungsvorrichtung einlegbarer Kapseln veranschaulicht;
- Fig. 2: eine erste Ausführungsform eines erfindungsgemäßen Getränkezubereitungssystems zeigt;
- Fig. 3: eine zweite Ausführungsform des erfindungsgemäßen Getränkezubereitungssystems zeigt; und
- Fig. 4: eine dritte Ausführungsform des erfindungsgemäßen Getränkezubereitungssystems zeigt

In den Figuren bezeichnen dieselben Bezugszeichen dieselben oder ähnliche Komponenten. Eine mehrfache, auf die einzelnen Figuren bezogene Erläuterung von mit denselben Bezugszeichen versehenen Komponenten wird aus Gründen der Klarheit der Darstellung der Erfindung weggelassen.

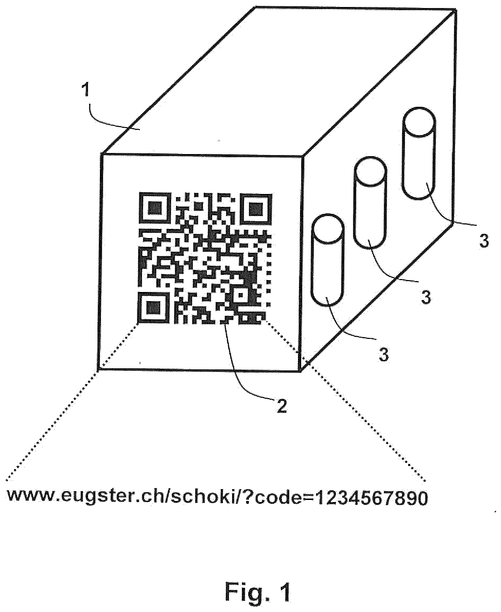

Fig. 1 zeigt beispielhaft eine Ausführungsform einer erfindungsgemäßen Gruppierung einer mit einem Codemittel versehenen Codeträgervorrichtung und einer Mehrzahl in eine Getränkezubereitungsvorrichtung einlegbarer Kapseln. Eine Codeträgervorrichtung 1 ist verkörpert durch ein schachteiförmiges Verpackungsgehäuse. Eine der Außenflächen der Codeträgervorrichtung 1 ist mit einem als ein QR-Code ausgebildetes flächiges zweidimensionales Codemuster 2 versehen. Im Inneren der Codeträgervorrichtung 1 ist aus dieser entnehmbar eine Mehrzahl von mit einem Getränkbasismaterial gefüllten Kapseln 3 bereitgestellt, die nach jeweiligem Einlegen in eine Getränkezubereitungsvorrichtung 5 des erfindungsgemäßen Getränkezubereitungssystems zum Zubereiten eines Getränks verwendet werden können. Allen Kapseln 3, die in der Codeträgervorrichtung 1 aufgenommen sind, ist derselbe Getränketyp bzw. zur Steuerung der Zubereitungsbetriebsmittel zu verwendende Steuerungsdatensatz zugeordnet. Das auf der Codeträgervorrichtung 1 angebrachte Codemittel 2 ist als QR-Code ausgebildet, um von einer mobilen Konfigurationsvorrichtung 14 des erfindungsgemäßen Getränkezubereitungssystems ausgelesen zu werden, um basierend auf dem ausgelesenen Codemittel 2 einen hinzuzufügenden Steuerungsdatensatz, der den in der Codeträgervorrichtung 1 aufgenommenen Kapseln 3 bzw. dem Getränketyp dieser Kapseln zugeordnet ist, in den Steuerungsdatensatz-Speicher 8 der Getränkezubereitungsvorrichtung 5 hinzuzufügen.

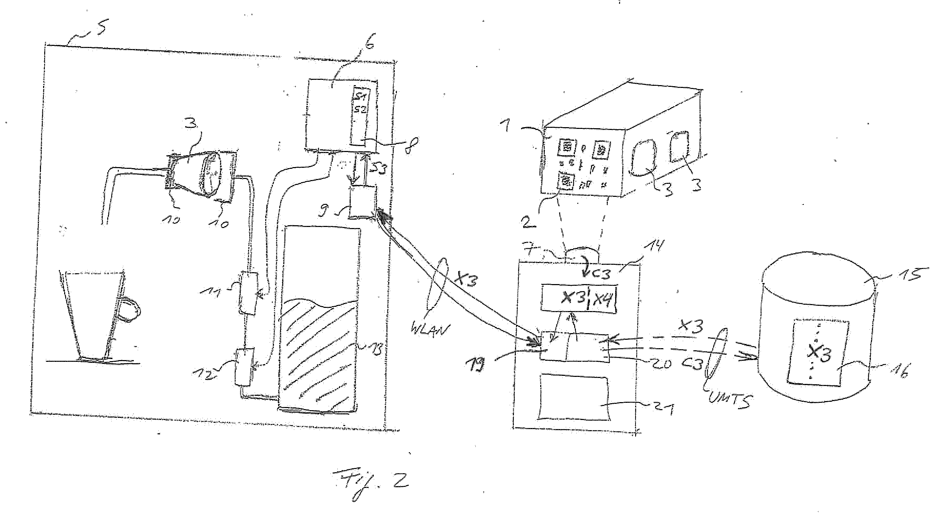

In Fig. 2 ist beispielhaft eine erste Ausführungsform des erfindungsgemäßen Getränkezubereitungssystems dargestellt. Eine Getränkezubereitungsvorrichtung 5 umfasst eine Steuereinheit 6, einen Steuerungsdatensatz-Speicher 8, eine Schnittstellen- und Aktualisierungseinheit 9, eine Kapselaufnahmeeinheit 10 zur Aufnahme einer Kapsel 3 zur Zubereitung eines Getränks, einen Durchlauferhitzer 11, eine Pumpe 12 und einen Wassertank 13. Wie in Fig. 2 gezeigt, sind beispielsweise in dem Steuerungsdatensatz-Speicher 8 zur Getränkezubereitung für die Steuereinheit 6 nutzbare Steuerungsdatensätze s1 und s2 gespeichert.

Der Durchlauferhitzer 11 und die Pumpe 12 bilden Zubereitungsbetriebsmittel und ihr Betrieb wird von der Steuereinheit 6 gesteuert. Die Pumpe 12 umfasst einen nicht gezeigten Flügelradzähler zum Bestimmen der Durchflussmenge und ist ausgebildet zum Pumpen, unter Steuerung durch die Steuereinheit 6, von Wasser aus dem Tank 13 zu dem Durchlauferhitzer 11, der ebenfalls durch die Steuereinheit 6 insbesondere hinsichtlich der von ihm bewirkten Temperaturerhöhung des ihn durchströmenden Wassers gesteuert wird, und anschließend zu der Kapselaufnahmeeinheit 10 bzw. durch eine eingelegte Kapsel 3 hindurch. Die Schnittstellen- und Aktualisierungseinheit 9 ist in Fig. 2 so dargestellt, dass sie über eine bidirektionale Kommunikationsleitung mit der Steuereinheit 6 und dem Steuerungsdatensatz-Speicher 8 verbunden ist. Die Schnittstellen- und Aktualisierungseinheit 9 kann aber auch, anders als in Fig. 2 dargestellt, in der Steuereinheit 6 aufgenommen oder durch diese realisiert sein.

Ferner ist in Fig. 2 eine mobile Konfigurationsvorrichtung 14 dargestellt. Die mobile Konfigurationsvorrichtung 14 ist versehen mit einer Codemittelausleseeinheit 7, einer Schnittstelleneinheit 19 zur Datenübertragung mit einer Getränkezubereitungsvorrichtung und einer Schnittstelleneinheit 20 zur Datenübertragung mit einer externen Servervorrichtung. Außerdem umfasst die mobile Konfigurationsvorrichtung 14 eine übliche Anzeigeeinheit und Benutzerschnittstelle 21, beispielsweise einen berührungsempfindlichen Bildschirm.

Wie in Fig. 2 dargestellt, ist die Codemittelausleseeinheit 7 der mobilen Konfigurationsvorrichtung 14 so ausgebildet, dass sie das auf der, bevorzugt um 0,5 bis 50 cm von der mobilen Konfigurationsvorrichtung 14 beabstandeten, Codeträgervorrichtung 1 angebrachte Codemuster 2 optisch erfassen und auslesen kann. Zwischen der Schnittstellen- und Aktualisierungseinheit 9 der Getränkezubereitungsvorrichtung 5 und der Schnittstelleneinheit 19 der mobilen Konfigurationsvorrichtung 14 ist eine funkbasierte Kommunikationsverbindung etabliert, beispielsweise wie in Fig. 2 gezeigt via eine WLAN-Verbindung. Die mobile Konfigurationsvorrichtung 14 ist außerdem über eine einen Internetzugriff ermöglichende Mobilfunknetzverbindung (in Fig. 2 beispielhaft durch eine UMTS-Mobilfunknetzverbindung veranschaulicht) mit einer externen Servervorrichtung 15 verbunden.

Nachdem die Codemittelausleseeinheit 7 der mobilen Konfigurationsvorrichtung 14 das Codemittel 2 der Codeträgervorrichtung 1 ausgelesen hat und daraus eine Steuerungsdatensatz-Codeinformation c3 gewonnen hat, ruft die mobile Konfigurationsvorrichtung 14 über die Datenkommunikationsverbindung mit der externen Servervorrichtung 15 aus einer in der externen Servervorrichtung 15 bereitgestellten Datenbank 16 auf Grundlage der dem Codemittel 2 zugeordneten Steuerungsdatensatz-Codeinformation Steuerungsdatensatz-Basisdaten ab, um die Steuerungsdatensatz-Basisdaten, in Fig. 2 beispielhaft als x3 veranschaulicht, zu beschaffen. Dann sendet die mobile Konfigurationsvorrichtung 14 die von der externen Servervorrichtung 15 abgerufenen Steuerungsdatensatz-Basisdaten x3 über die zwischen der Schnittstelleneinheit 19 der mobilen Konfigurationsvorrichtung 14 und der Schnittstellen- und Aktualisierungseinheit 9 der Getränkezubereitungsvorrichtung 5 etablierte Datenkommunikationsverbindung an die Getränkezubereitungsvorrichtung 5. Da die Steuerungsdatensatz-Basisdaten in dieser Ausführungsform bereits einen Steuerungsdatensatz enthalten oder als Steuerungsdatensatz ausgebildet sind, extrahiert die Schnittstellen- und Aktualisierungseinheit 9 aus den empfangenen Steuerungsdatensatz-Basisdaten x3 den Steuerungsdatensatz s3, wie in Fig. 2 gezeigt, und schreibt diesen in den Steuerungsdatensatz-Speicher 8 bzw. fügt diesen dort hinzu. Die Steuereinheit 6 der Getränkezubereitungsvorrichtung 5 kann anschließend den in dem Steuerungsdatensatz-Speicher 8 gespeicherten Steuerungsdatensatz s3 mehrfach zur Steuerung der Zubereitungsbetriebsmittel 11 und 12 zwecks Zubereitung eines Getränks aus der Kapsel 3 einsetzen.

Wie zuvor bezüglich Fig. 2 erläutert, ist gemäß einer erfindungsgemäßen Ausführungsform die mobile Konfigurationsvorrichtung 14 fähig zum Abrufen, auf Grundlage einer dem ausgelesenen Codemittel 2 zugeordneten Steuerungsdatensatz-Codeinformation, von Steuerungsdatensatz-Basisdaten von der externen Servervorrichtung 15 und zum anschließenden Übertragen der abgerufenen Steuerungsdatensatz-Basisdaten an die Getränkezubereitungsvorrichtung 5. Dieser Abruf der Steuerungsdatensatz-Basisdaten ist für die in Fig. 2 gezeigte Ausführungsform aber nur ein optionales bevorzugtes Merkmal des erfindungsgemäßen Getränkezubereitungssystems. Aus diesem Grund sind die die Datenverbindung zwischen der mobilen Konfigurationsvorrichtung 14 und der externen Servervorrichtung 15 darstellenden Linien auch nur gestrichelt gezeichnet.

Die mobile Konfigurationsvorrichtung 14 kann gemäß der in Fig. 2 gezeigten Ausführungsform nämlich auch Steuerungsdatensatz-Basisdaten an die Getränkezubereitungsvorrichtung 5 übertragen, ohne diese zuvor von der externen Servervorrichtung 15 abzurufen oder überhaupt mit einer externen Servervorrichtung verbunden zu sein. Wie in Fig. 2 gezeigt, sind in der mobilen Konfigurationsvorrichtung 14 bereits Steuerungsdatensatz-Basisdaten, in Fig. 2 als x4 gezeigt, bereitgestellt. Derartige Steuerungsdatensatz-Basisdaten können beispielsweise durch ein Software-Update der mobilen Konfigurationsvorrichtung 14, oder im Rahmen ihrer Erstinstallation als Programm bzw. App auf einem mobilen Endgerät, unabhängig von einem Auslesen eines Codemittels 2 in die Steuerungsdatensatz-Basisdaten-Bereitstellungseinheit 18 eingebracht worden sein. Nach dem Auslesen eines Codemittels 2 und dem Gewinnen einer zugehörigen Steuerungsdatensatz-Codeinformation erkennt die mobile Konfigurationseinheit 14, dass für diese gewonnene Steuerungsdatensatz-Codeinformation bereits Steuerungsdatensatz-Basisdaten in der mobilen Konfigurationsvorrichtung 14 bereitgestellt werden. Ohne Abrufen einer Information von der externen Servervorrichtung 15 überträgt die mobile Konfigurationsvorrichtung 14 dann die Steuerungsdatensatz-Basisdaten, in Fig. 2 als Steuerungsdatensatz x4 veranschaulicht, an die Getränkezubereitungsvorrichtung.

Wenn die Steuerungsdatensatz-Basisdaten direkt aus der gewonnenen Steuerungsdatensatz-Codeinformation extrahiert bzw. gewonnen werden können, wie es für eine Alternative des erfindungsgemäßen Getränkezubereitungssystems berücksichtigt wird, ist eine dauerhafte Speicherung dieser Steuerungsdatensatz-Basisdaten in der mobilen Konfigurationsvorrichtung nicht erforderlich.

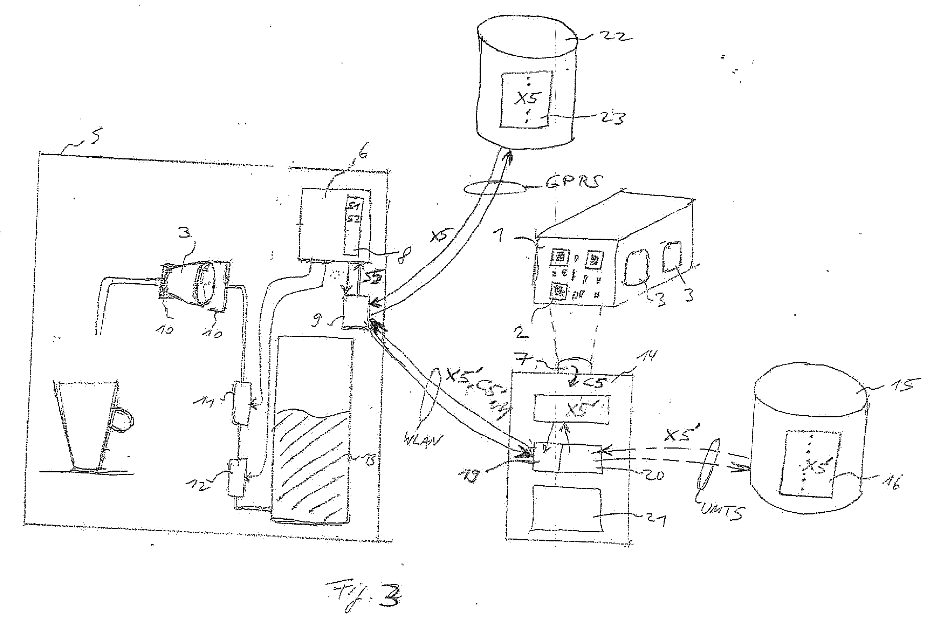

Fig. 3 zeigt eine zweite Ausführungsform des erfindungsgemäßen Getränkezubereitungssystems. Der Unterschied zu dem in Fig. 2 dargestellten Getränkezubereitungssystem besteht darin, dass die Schnittstellen- und Aktualisierungseinheit 9 der Getränkezubereitungsvorrichtung 5 von Fig. 3 zusätzlich zu der Datenkommunikationsverbindung mit der mobilen Konfigurationsvorrichtung 14 ferner zur Etablierung einer Datenkommunikationsverbindung mit einer externen Servervorrichtung 22 fähig ist, die von der mobilen Konfigurationsvorrichtung 14 unterschiedlich ist. In Fig. 3 ist diese Datenkommunikationsverbindung als eine Mobilfunknetzverbindung (in Fig. 3 beispielhaft als GPRS-Mobilfunknetzverbindung veranschaulicht) mit einer zweiten externen Servervorrichtung 22 mit einer darin aufgenommenen Datenbank 23 genannt, gezeigt.

In dieser Ausführungsform gemäß Fig. 3 sind in der mobilen Konfigurationsvorrichtung 14 vorläufige Steuerungsdatensatz-Basisdaten bereitgestellt, in Fig. 3 beispielhaft als vorläufige bzw. erste Steuerungsdatensatz-Basisdaten x5' veranschaulicht. Die vorläufigen Steuerungsdatensatz-Basisdaten x5' enthalten eine Internetadresse einer Servervorrichtung (in Fig. 3 als Servervorrichtung 22 veranschaulicht; alternativ kann auch immer eine feste Serveradresse aufgerufen werden, wobei dann die Serveradresse entfallen kann), ergänzt um eine Steuerungsdatensatz-Codeinformation-spezifische Zusatzinformation (in Fig. 3 mit Bezugzeichen c5' veranschaulicht) sowie eine die Getränkezubereitungsvorrichtung spezifizierende Information (in Fig. 3 mit Bezugzeichen M veranschaulicht), zum Abrufen der dem ausgelesenen Codemittel 2 zugeordneten endgültigen Steuerungsdatensatz-Basisdaten x5. Diese endgültigen Steuerungsdatensatz-Basisdaten x5 können identisch sein mit dem ihnen zugeordneten Steuerungsdatensatz s5. Über die Datenkommunikationsverbindung zwischen der Schnittstellen- und Aktualisierungseinheit 9 der Getränkezubereitungsvorrichtung 5 und der Schnittstelleneinheit 19 der mobilen Konfigurationseinheit 14 empfängt die Getränkezubereitungsvorrichtung 5 zunächst die Konfigurationsvorrichtungs-seitigen, temporären Steuerungsdatensatz-Basisdaten, in Fig. 3 als Steuerungsdatensatz-Basisdaten x5' illustriert. Dann ruft die Schnittstellen- und Aktualisierungseinheit 9 der Getränkezubereitungsvorrichtung 5 die in den empfangenen Steuerungsdatensatz-Basisdaten x5' enthaltene Internetadresse auf und etabliert eine Datenübertragungsverbindung mit der über diese Internetadresse erreichbaren externen Servervorrichtung 22, um aus der darin enthaltenen Datenbank 23 die endgültigen Steuerungsdatensatz-Basisdaten x5 auf Grundlage der Steuerungsdatensatz-Codeinformation-spezifischen Zusatzinformation c5' und der die Getränkezubereitungsvorrichtung spezifizierende Information M abzurufen. Nachdem die externe Servervorrichtung 22 die endgültigen Steuerungsdatensatz-Basisdaten x5 an die Schnittstellen- und Aktualisierungseinheit 9 der Getränkezubereitungsvorrichtung 5 übertragen hat, extrahiert die Schnittstellen- und Aktualisierungseinheit 9 aus den empfangenen endgültigen Steuerungsdatensatz-Basisdaten x5 den Steuerungsdatensatz s5 (bzw. übernimmt einfach den Steuerungsdatensatz s5, wenn dieser als endgültige Steuerungsdatensatz-Basisdaten von der externen Servervorrichtung 22 gesendet wurde) und fügt ihn dem Steuerungsdatensatz-Speicher 8 hinzu. Die zuvor erwähnte Steuerungsdatensatz-Codeinformation-spezifische Zusatzinformation c5' sowie die die Getränkezubereitungsvorrichtung spezifizierende Information M für den Abruf der endgültigen Steuerungsdatensatz-Basisdaten x5 von der externen Servervorrichtung 22 sind in Fig.1 beispielhaft kombiniert durch "code=1234567890" als Bestandteil einer Internetadresse veranschaulicht.

Wie schon zuvor hinsichtlich Fig. 2 erwähnt, kann auch die mobile Konfigurationsvorrichtung 14 der zweiten Ausführungsform fakultativ mit einer Servervorrichtung 15 zum Abrufen von vorläufigen Steuerungsdatensatz-Basisdaten auf Grundlage der gewonnenen Steuerungsdatensatz-Codeinformation verbunden sein. Die externe Servervorrichtung zum Abruf der vorläufigen Steuerungsdatensatz-Basisdaten durch die mobile Konfigurationsvorrichtung, in Fig. 3 beispielhaft durch die Servervorrichtung 15 mit der Datenbank 16 veranschaulicht, und die externe Servervorrichtung zum Abruf der endgültigen Steuerungsdatensatz-Basisdaten durch die Getränkezubereitungsvorrichtung, in Fig. 3 beispielhaft durch die Servervorrichtung 22 mit der Datenbank 23 veranschaulicht, kann ein- und dieselbe Servervorrichtung sein. Die Datenbanken 16 und 23 können dann als eine verknüpfte Datenbank in derselben Servervorrichtung bereitstellt sein.

Die in Fig. 3 veranschaulichte Ausführungsform des erfindungsgemäßen Getränkezubereitungssystems, bei dem ein in den Steuerungsdatensatz-Speicher der Getränkezubereitungsvorrichtung hinzuzufügender Steuerungsdatensatz nicht von der das Codemittel auswertenden mobilen Konfigurationsvorrichtung an die Getränkezubereitungsvorrichtung übertragen wird, sondern von einer externen Servervorrichtung mittels endgültiger Steuerungsdatensatz-Basisdaten direkt an die Getränkezubereitungsvorrichtung übertragen wird, also ohne Speicherung einer den hinzuzufügenden Steuerungsdatensatz unmittelbar betreffenden Information in der mobilen Konfigurationsvorrichtung, ermöglicht einen besonders wirkungsvollen Schutz der hinzuzufügenden Steuerungsdatensätze und somit auch der Getränkezubereitungsvorrichtung vor Manipulationsversuchen.

Die hinsichtlich der Getränkevielfalt bzw. der Anzahl zur Getränkezubereitung nutzbarer Steuerungsdatensätze zu erweiternde Getränkezubereitungsvorrichtung wird bevorzugt in allen Ausführungsformen des erfindungsgemäßen Getränkezubereitungssystems als eine die Getränkezubereitungsvorrichtung identifizierende Information M der mobilen Konfigurationsvorrichtung dadurch bekannt gemacht, dass die Getränkezubereitungsvorrichtung zumindest temporär eine Datenverbindung mit der mobilen Konfigurationsvorrichtung etabliert und dabei eine die Getränkezubereitungsvorrichtung eindeutig identifizierende Information, beispielsweise eine Information aus einer SIM-Karte eines Mobilfunkmoduls der Getränkezubereitungsvorrichtung und/oder eine MAC-Adresse der Schnittstellen- und Aktualisierungseinheit, automatisch an die mobile Konfigurationsvorrichtung übertragen und darin gespeichert wird, oder ein Benutzer eine eindeutige Gerätenummer der Getränkezubereitungsvorrichtung der mobilen Konfigurationsvorrichtung bekannt macht, beispielsweise durch Eingeben eines alphanumerischen Codes oder durch Aufzeichnen, insbesondere Photographieren, der Gerätenummer mit der mobilen Konfigurationsvorrichtung und anschließende Zeichenerkennung durch die mobile Konfigurationsvorrichtung.

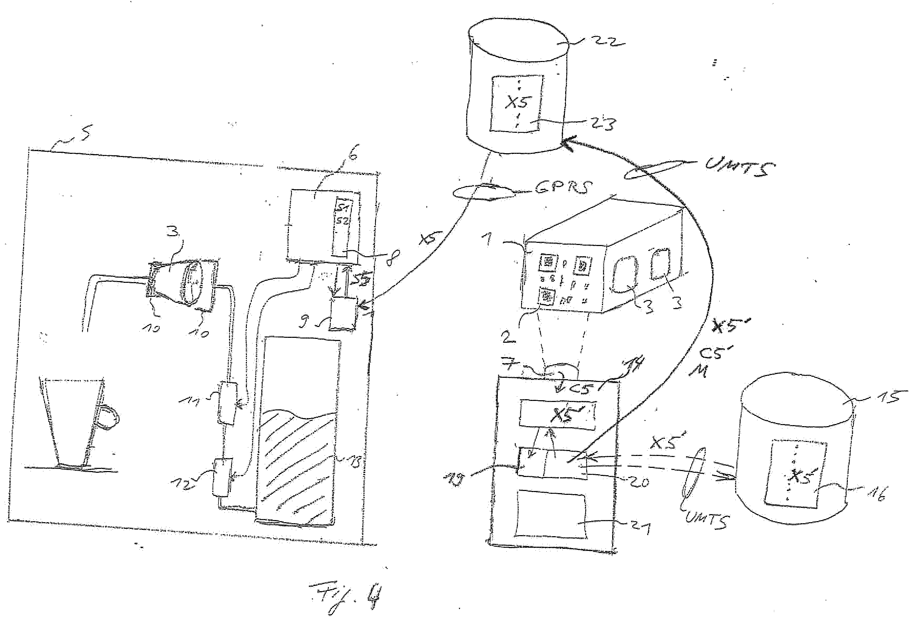

Fig. 4 zeigt eine dritte Ausführungsform des erfindungsgemäßen Getränkezubereitungssystems. Ein besonders wichtiger Unterschied zu den in Fig. 2 und Fig. 3 veranschaulichten Ausführungsformen besteht darin, dass bei der in Fig. 4 beispielhaften gezeigten dritten Ausführungsform keine direkte Datenübertragung zwischen der Getränkezubereitungsvorrichtung 5 und der mobilen Konfigurationsvorrichtung 14 etabliert oder erforderlich ist. Nach dem Auslesen des Codemittels und der daraus gewonnenen Steuerungsdatensatz-Codeinformation c5 überträgt die mobile Konfigurationsvorrichtung 14 mittels einer etablierten Datenverbindung, in Fig. 4 durch eine UMTS-basierte Mobilfunkverbindung veranschaulicht, an die externe Servervorrichtung 22, beispielsweise auf Grundlage der Steuerungsdatensatz-Codeinformation-spezifischen Zusatzinformation c5' und der die Getränkezubereitungsvorrichtung spezifizierenden Information M als vorläufige Steuerungsdatensatz-Basisdaten x5', eine Aufforderung zur Bereitstellung der der gewonnenen Steuerungsdatensatz-Codeinformation c5 zugeordneten endgültigen Steuerungsdatensatz-Basisdaten x5 (oder des Steuerungsdatensatzes s5) für die durch die Information M eindeutig identifizierbare bzw. spezifizierte Getränkezubereitungsvorrichtung 5. Die externe Servervorrichtung 22 stellt dann die endgültigen Steuerungsdatensatz-Basisdaten x5 (oder den Steuerungsdatensatz s5) in der Datenbank 26 für die Getränkezubereitungsvorrichtung 5 (spezifiziert durch Information M) bereit und initiiert eine Etablierung einer Datenverbindung, in Fig. 4 beispielhaft als Mobilfunkverbindung (GPRS) dargestellt, mit der Getränkezubereitungsvorrichtung 5, um die endgültigen Steuerungsdatensatz-Basisdaten x5 (oder den Steuerungsdatensatz s5) an die Getränkezubereitungsvorrichtung 5 zu senden. Alternativ zu einer durch die externe Servervorrichtung 22 initiierten Datenverbindung kann die Getränkezubereitungsvorrichtung 5 in vorbestimmten Zeitabständen, beispielsweise täglich, über eine etablierte Datenverbindung bei der Servervorrichtung 22 anfragen, ob ein hinzuzufügender oder zu aktualisierender Steuerungsdatensatz bzw. dessen endgültigen Steuerungsdatensatz-Basisdaten für diese Getränkezubereitungsvorrichtung 5 zum Abruf bzw. Herunterladen bereit steht bzw. stehen.

Zusätzlich zu den Vorteilen der in Fig. 3 gezeigten Ausführungsform bietet die in Fig. 4 gezeigte Ausführungsform ohne Datenverbindung zwischen der Getränkezubereitungsvorrichtung und der mobilen Konfigurationsvorrichtung den besonderen Vorteil einer nochmals gesteigerten Sicherheit gegenüber eine Manipulation der Steuerungsdatensätze und einer beliebig möglichen räumlichen Entfernung zwischen der Getränkezubereitungsvorrichtung und der mobilen Konfigurationsvorrichtung ohne Beeinträchtigung der Erweiterungsfähigkeiten.

Die oben erläuterten beispielhaften Ausführungsformen dienen lediglich der Beschreibung der vorliegenden Erfindung und sollen nicht als den Schutzbereich der Erfindung einschränkend aufgefasst werden.

### Bezugszeichenliste

- 1: Codeträgervorrichtung
- 2: Codemuster/Codemittel
- 3: Kapsel
- 5: Getränkezubereitungsvorrichtung
- 6: Steuereinheit
- 7: Codemittelausleseeinheit
- 8: Steuerungsdatensatz-Speicher
- 9: Schnittstellen- und Aktualisierungseinheit
- 10: Kapselaufnahmeeinheit
- 11: Durchlauferhitzer
- 12: Pumpe
- 13: Wassertank
- 14: mobile Konfigurationsvorrichtung
- 15, 22: Servervorrichtung
- 16, 23: Steuerungsdatensatz-Basisdaten-Datenbank
- 19: Schnittstelleneinheit zur Datenübertragung mit einer Getränkezubereitungsvorrichtung
- 20: Schnittstelleneinheit zur Datenübertragung mit einer externen Servervorrichtung
- 21: Anzeigeeinheit und Benutzerschnittstelle

- M: Getränkezubereitungsvorrichtung identifizierende Information
- c3, c5: Steuerungsdatensatz-Codeinformation
- c5': Steuerungsdatensatz-Codeinformation-spezifischen Zusatz-information
- s1, s2, s3, s4, s5: Steuerungsdatensatz
- x3, x4, x5: (endgültige) Steuerungsdatensatz-Basisdaten
- x5': (vorläufige) Steuerungsdatensatz-Basisdaten

## Patentansprüche

1. Getränkezubereitungssystem mit einer Getränkezubereitungsvorrichtung (5) und einer von der Getränkezubereitungsvorrichtung (5) separat bereitgestellten, mobilen Konfigurationsvorrichtung (14),
wobei die, insbesondere als Kapselmaschine ausgebildete, Getränkezubereitungsvorrichtung (5) umfasst:
Zubereitungsbetriebsmittel (11,12) zum Zubereiten eines Getränks aus einem, insbesondere in einer Kapsel (3) aufgenommenen, Getränkbasismaterial;
einen Steuerungsdatensatz-Speicher (8) zum Speichern, auch für nachfolgende Getränkebezüge, getränketypspezifischer Steuerungsdatensätze (s1, s2, s3, s5) und Bereitstellen einer Anzahl bei einer Getränkezubereitung nutzbarer Steuerungsdatensätze (s1, s2, s3);
eine Steuereinheit (6) zum Steuern der Zubereitungsbetriebsmittel (11, 12) auf Grundlage eines der gespeicherten nutzbaren Steuerungsdatensätze (s1, s2, s3, s5) während einer Zubereitung eines Getränks; und
eine Schnittstellen- und Aktualisierungseinheit (9) zum drahtgebundenen oder funkbasierten Empfangen von Steuerungsdatensatz-Basisdaten (x3, x4, x5) von der mobilen Konfigurationsvorrichtung (14) und/oder einer externen Servervorrichtung (22) und zum Hinzufügen, auf Grundlage der empfangenen Steuerungsdatensatz-Basisdaten (x3, x4, x5), eines hinzuzufügenden Steuerungsdatensatzes (s3, s5) zu der in dem Steuerungsdatensatz-Speicher (8) bereitgestellten Anzahl bei einer Getränkezubereitung nutzbarer Steuerungsdatensätze (s1, s2, s3, s4, s5) und/oder zum Aktualisieren, auf Grundlage der empfangenen Steuerungsdatensatz-Basisdaten (x3, x4, x5), eines in dem Steuerungsdatensatz-Speicher (8) gespeicherten, zu aktualisierenden Steuerungsdatensatzes (s3, s4, s5),
wobei die mobile Konfigurationsvorrichtung (14) umfasst:
eine Codemittelausleseeinheit (7) zum, insbesondere kontaktfreien, Auslesen eines auf einer, bevorzugt externen, Codeträgervorrichtung (1) angebrachten Codemittels (2) und zum Gewinnen einer Steuerungsdatensatz-Codeinformation (c3, c5), der ein hinzuzufügender oder zu aktualisierender Steuerungsdatensatz (s3, s5) für die Getränkezubereitungsvorrichtung (5) und entsprechende Steuerungsdatensatz-Basisdaten (x3, x5) zugeordnet sind, aus dem ausgelesenen Codemittel (2);
eine Schnittstelleneinheit (19, 20) zum drahtgebundenen oder funkbasierten Übertragen von den der gewonnenen Steuerungsdatensatz-Codeinformation (c3, c5) zugeordneten Steuerungsdatensatz-Basisdaten (x3, x5) an die Getränkezubereitungsvorrichtung (5) und/oder zur drahtgebundenen oder funkbasierten Datenübertragung mit einer externen Servervorrichtung (22) zwecks einer Bereitstellung, für die Getränkezubereitungsvorrichtung (5), von den der gewonnenen Steuerungsdatensatz-Codeinformation (c) zugeordneten Steuerungsdatensatz-Basisdaten (x5), und
wobei für die in dem Steuerungsdatensatz-Speicher (8) der Getränkezubereitungsvorrichtung (5) bereitgestellten, nutzbaren Steuerungsdatensätze jeweilige Getränkebezugzähler in der Getränkezubereitungsvorrichtung (5) und/oder mittels einer Datenkommunikation mit einer externen Servervorrichtung (15, 22) betriebsfähig bereitgestellt sind, und die Schnittstellen- und Aktualisierungseinheit (9) der Getränkezubereitungsvorrichtung (5) ausgebildet ist zum Extrahieren eines dem hinzuzufügenden oder zu aktualisierenden Steuerungsdatensatz zugeordneten Getränkebezugzähler-Grenzwertes aus den empfangenen Steuerungsdatensatz-Basisdaten (x3, x5), und dass die Steuereinheit (6) der Getränkezubereitungsvorrichtung (5) ausgebildet ist zum Unnutzbarmachen des hinzugefügten oder aktualisierten Steuerungsdatensatzes in dem Steuerungsdatensatz-Speicher (8), wenn der jeweilige Getränkebezugzähler den Getränkebezugzähler-Grenzwert erreicht oder überschreitet.

2. Getränkezubereitungssystem nach Anspruch 1,
**dadurch gekennzeichnet,**
**dass** die Schnittstellen- und Aktualisierungseinheit (9) der Getränkezubereitungsvorrichtung (5) ausgebildet ist zu dem Hinzufügen, auf Grundlage der empfangenen Steuerungsdatensatz-Basisdaten (x3, x5), eines hinzuzufügenden Steuerungsdatensatzes (s3, s5) zu der in dem Steuerungsdatensatz-Speicher (8) bereitgestellten Anzahl bei einer Getränkezubereitung nutzbarer Steuerungsdatensätze durch Nutzbarmachen eines in dem Steuerungsdatensatz-Speicher (8) bereits gespeicherten, aber zuvor nicht zur Zubereitung eines Getränks nutzbaren Steuerungsdatensatzes und/oder durch Schreiben eines nutzbaren Steuerungsdatensatzes in den Steuerungsdatensatz-Speicher. (8)

3. Getränkezubereitungssystem nach Anspruch 1 oder 2,
**dadurch gekennzeichnet,**
**dass** die Schnittstellen- und Aktualisierungseinheit (9) der Getränkezubereitungsvorrichtung (5) ferner ausgebildet ist zum Extrahieren des hinzuzufügenden oder zu aktualisierenden Steuerungsdatensatzes (s3, s5) aus den empfangenen Steuerungsdatensatz-Basisdaten (x3, x5) und/oder zum Generieren des hinzuzufügenden oder zu aktualisierenden Steuerungsdatensatzes (s3, s5) auf Grundlage der empfangenen Steuerungsdatensatz-Basisdaten (x3, x5).

4. Getränkezubereitungssystem nach einem der vorherigen Ansprüche,
**dadurch gekennzeichnet,**
**dass** die Schnittstellen- und Aktualisierungseinheit (9) der Getränkezubereitungsvorrichtung (5) ferner ausgebildet ist zum Überschreiben, auf Grundlage der empfangenen Steuerungsdatensatz-Basisdaten (x3, x5), eines in dem Steuerungsdatensatz-Speicher (8) gespeicherten Steuerungsdatensatzes mit einem hinzuzufügenden Steuerungsdatensatz.

5. Getränkezubereitungssystem nach einem der vorherigen Ansprüche,
**dadurch gekennzeichnet,**
**dass** die Steuerungsdatensätze (s1, s2, s3, s4, s5) jeweilige Variablenwert-Datensätze für Betriebsparameter, insbesondere ein Temperaturwert, ein Druckwert, ein Flüssigkeitsmengenwert, einer der Steuereinheit vorgegebenen Steuerungssequenz, insbesondere bestehend aus aufeinanderfolgenden Sequenzschritten eines Anfeuchtens, eines Pausierens, eines Brühens bzw. Durchmischens, und eines Ausstoßens, zur Getränkezubereitung umfassen, oder dass die Steuerungsdatensätze jeweilige, für eine Verarbeitung durch die Steuereinheit (6) ausgebildete Programmcodes darstellen, wobei bevorzugt die Steuereinheit (6) dann so ausgebildet ist, dass sie, gemäß einer Verarbeitung eines einen Steuerungsdatensatz darstellenden Programmcodes, mindestens eine Pumpe der Zubereitungsbetriebsmittel (11, 12) zur Zubereitung eines Getränks mit einer, bevorzugt zeitveränderlichen, Phasenanschnitt- oder Phasenabschnittansteuerung und/oder mit einer reduzierten bzw. zeitvariabel gesteuerten Spannung betreiben kann.

6. Getränkezubereitungssystem nach einem der vorherigen Ansprüche,
**dadurch gekennzeichnet,**
**dass** die Getränkezubereitungsvorrichtung (5) ferner gemäß einer ersten Alternative eine Kapselaufnahmeeinheit (10) zum Aufnehmen einer in die Getränkezubereitungsvorrichtung (5) eingelegten, mit einem Getränkbasismaterial gefüllten Kapsel (3), eine Getränketypcode-Verwertungseinheit zum Erkennen eines der eingelegten Kapsel (3) zugeordneten Getränketyps auf Grundlage eines an/in der Kapsel (3) angebrachten Kapselcodemittels und zum, bevorzugt benutzerinteraktionsfreien, Auswählen des dem erkannten Getränketyp zugeordneten Steuerungsdatensatzes für eine Zubereitung eines Getränks aus der eingelegten Kapsel (3) und besonders bevorzugt zum Veranlassen eines benutzerinteraktionsfreien Startens eines Betriebs der Zubereitungsbetriebsmittel (11, 12) umfasst, oder gemäß einer zweiten Alternative, bei der die Getränkezubereitungsvorrichtung bevorzugt als ein Vollautomat ausgebildet ist, die Zubereitungsbetriebsmittel (11, 12) eine durch die Steuereinheit (6), bevorzugt auf Grundlage eines Steuerungsdatensatzes, gesteuerte Mahleinheit zum Mahlen eines in die Getränkezubereitungsvorrichtung eingebrachten Getränkbasismaterials und eine Benutzerschnittstelle zum Auswählen eines Getränketyps aus den der Anzahl bei einer Getränkezubereitung nutzbarer Steuerungsdatensätze zugeordneten Getränketypen umfassen.

7. Getränkezubereitungssystem nach einem der vorherigen Ansprüche
**dadurch gekennzeichnet,**
**dass** die mobile Konfigurationsvorrichtung (14) ausgebildet ist zum Beschaffen der der gewonnenen Steuerungsdatensatz-Codeinformation (c3, c5) zugeordneten Steuerungsdatensatz-Basisdaten (x3, x5) durch ein Transformieren der gewonnenen Steuerungsdatensatz-Codeinformation in die Steuerungsdatensatz-Basisdaten (x3, x5) und/oder durch ein Abrufen, auf Grundlage der gewonnenen Steuerungsdatendatz-Codeinformation, einer in der mobilen Konfigurationsvorrichtung (14) bereitgestellten Datenbank und/oder einer in einer externen Servervorrichtung (15) zum drahtgebundenen oder funkbasierten Datenabruf durch die mobile Konfigurationsvorrichtung (14) bereitgestellten Datenbank (16).

8. Getränkezubereitungssystem nach einem der vorherigen Ansprüche
**dadurch gekennzeichnet,**
**dass** es ferner eine externe Servervorrichtung (15, 22) mit einer Datenbank (16, 23) mit darin gespeicherten Steuerungsdatensatz-Basisdaten (x3, x5) für eine drahtgebundene oder funkbasierte Datenübertragung, auf Grundlage einer gewonnenen Steuerungsdatensatz-Codeinformation (c3, c5), an die mobile Konfigurationsvorrichtung (14) und/oder an die Getränkezubereitungsvorrichtung (5) umfasst.

9. Getränkezubereitungssystem nach einem der vorherigen Ansprüche
**dadurch gekennzeichnet,**
**dass** es ferner eine externe Servervorrichtung (22) mit einer Datenbank (23) mit darin gespeicherten Steuerungsdatensatz-Basisdaten (x5) für eine drahtgebundene oder funkbasierte Datenübertragung an die Getränkezubereitungsvorrichtung (5) umfasst, und dass die externe Servervorrichtung (22) ausgebildet ist zum Bereitstellen, auf Grundlage einer mittels einer drahtgebundenen oder funkbasierten Datenübertragung von der mobilen Konfigurationsvorrichtung (14) an die externe Servervorrichtung (22) übertragenen Steuerungsdatensatz-Codeinformation (c5') bzw. zugeordneter Steuerungsdatensatz-Basisdaten sowie bevorzugt einer Information (M) zur Spezifizierung und/oder Identifizierung der Getränkezubereitungsvorrichtung, von den zugeordneten Steuerungsdatensatz-Basisdaten und zum drahtgebundenen oder funkbasierten Übertragen, bevorzugt initiiert durch die externe Servervorrichtung (22), der Steuerungsdatensatz-Basisdaten an die, bevorzugt spezifizierte und/oder identifizierte, Getränkezubereitungsvorrichtung (5).

10. Getränkezubereitungssystem nach einem der vorherigen Ansprüche,
**dadurch gekennzeichnet,**
**dass** die Codemittelausleseeinheit (7) der mobilen Konfigurationsvorrichtung (14) ausgebildet ist zum Auswerten des Codemittels (2), das als ein, bevorzugt zweidimensionales, Codemuster (2) ausgebildet ist, das eines ist aus der Gruppe von einem Barcode, einem QR-Code, einem DataMatrix-Code, einem Semacode, einem Aztec-Code, einem Maxi-Code oder einem EZ-Code oder eine beliebige Kombination dieser Codes, und/oder dass die Codemittelausleseeinheit (7) ausgebildet ist zum Auswerten des durch einen code-auslesbaren RFID-Transponder ausgestalteten Codemittels (2).

11. Verfahren zum Erweitern einer von einer Getränkezubereitungsvorrichtung (5) eines Getränkezubereitungssystems, insbesondere nach einem der Ansprüche 1 bis 10, zur Zubereitung bereitgestellten Anzahl von Getränketypen, mit den Schritten zum:
Auslesen eines Codemittels (2) einer Codeträgervorrichtung (1) durch eine mobile Konfigurationsvorrichtung (14) des Getränkezubereitungssystems und Gewinnen einer Steuerdatensatz-Codeinformation (c3, c5), der ein hinzuzufügender oder zu aktualisierender Steuerungsdatensatz (s3, s5) für die Getränkezubereitungsvorrichtung (5) und entsprechende Steuerungsdatensatz-Basisdaten (x3, x5) zugeordnet sind, aus dem ausgelesenen Codemittel (2) durch die mobile Konfigurationsvorrichtung (14);
drahtgebundenen oder funkbasierten Übertragen von den der gewonnenen Steuerungsdatensatz-Codeinformation zugeordneten Steuerungsdatensatz-Basisdaten (x3, x5) an die Getränkezubereitungsvorrichtung (5) und/oder Bewirken, mittels Etablieren einer drahtgebundenen oder funkbasierten Datenübertragung zwischen der mobilen Konfigurationsvorrichtung (14) und einer externen Servervorrichtung (22), einer Bereitstellung, durch die externe Servervorrichtung (22) für die Getränkezubereitungsvorrichtung (5), von den der gewonnenen Steuerungsdatensatz-Codeinformation (c5) zugeordneten Steuerungsdatensatz-Basisdaten (x5) und drahtgebundenes oder funkbasiertes Übertragen der Steuerungsdatensatz-Basisdaten (x5) von der externen Servervorrichtung (22) an die Getränkezubereitungsvorrichtung (5);
Empfangen der übertragenen Steuerungsdatensatz-Basisdaten (x3, x5) durch die Getränkezubereitungsvorrichtung (5) und Hinzufügen, auf Grundlage der empfangenen Steuerungsdatensatz-Basisdaten, eines hinzuzufügenden Steuerungsdatensatzes (s3, s5) zu der durch die Getränkezubereitungsvorrichtung (5) bereitgestellten Anzahl bei einer Getränkezubereitung nutzbarer Steuerungsdatensätze und/oder Aktualisieren, auf Grundlage der empfangenen Steuerungsdatensatz-Basisdaten (x3, x5), eines in der Getränkezubereitungsvorrichtung (5) gespeicherten, zu aktualisierenden Steuerungsdatensatzes (s3);
betriebsfähigen Bereitstellen, für die in einem Steuerungsdatensatz-Speicher (8) der Getränkezubereitungsvorrichtung (5) bereitgestellten, nutzbaren Steuerungsdatensätze, jeweiliger Getränkebezugzähler in der Getränkezubereitungsvorrichtung (5) und/oder mittels einer Datenkommunikation mit einer externen Servervorrichtung (15, 22);
Extrahieren, in einer Schnittstellen- und Aktualisierungseinheit (9) der Getränkezubereitungsvorrichtung (5), eines dem hinzuzufügenden oder zu aktualisierenden Steuerungsdatensatz zugeordneten Getränkebezugzähler-Grenzwertes aus den empfangenen Steuerungsdatensatz-Basisdaten (x3, x5);
Aktualisieren, durch eine Steuereinheit (6) der Getränkezubereitungsvorrichtung (5), eines Getränkebezugzählers zum Nachhalten einer Anzahl der dem hinzugefügten oder aktualisiertem Steuerungsdatensatz zugeordneten und durch die Getränkezubereitungsvorrichtung hergestellten Getränke; und
Unnutzbarmachen, durch die Steuereinheit (6) der Getränkezubereitungsvorrichtung (5), des hinzugefügten oder aktualisierten Steuerungsdatensatzes in dem Steuerungsdatensatz-Speicher (8), wenn der jeweilige Getränkebezugzähler den Getränkebezugzähler-Grenzwert erreicht oder überschreitet.

12. Verfahren nach Anspruch 11,
**gekennzeichnet durch**
einen weiteren Schritt zum Beschaffen der der gewonnenen Steuerungsdatensatz-Codeinformation (c3) zugeordneten Steuerungsdatensatz-Basisdaten (x3) durch ein Transformieren der gewonnenen Steuerungsdatensatz-Codeinformation (c3) in die Steuerungsdatensatz-Basisdaten (x3) und/oder durch ein Abrufen, auf Grundlage der gewonnenen Steuerungsdatensatz-Codeinformation, einer in der mobilen Konfigurationsvorrichtung (14) bereitgestellten Datenbank und/oder einer in einer externen Servervorrichtung (15) zum drahtgebundenen oder funkbasierten Datenabruf durch die mobile Konfigurationsvorrichtung (14) bereitgestellten Datenbank (16).

13. Verfahren nach Anspruch 11 oder 12,
**gekennzeichnet durch**,
einen weiteren Schritt zum Vorsehen einer externen Servervorrichtung (22) mit einer Datenbank (23) mit darin gespeicherten Steuerungsdatensatz-Basisdaten (x5) für eine drahtgebundene oder funkbasierte Datenübertragung an die Getränkezubereitungsvorrichtung (5), und einen Schritt zum Bereitstellen, durch die externe Servervorrichtung (22), auf Grundlage einer mittels einer drahtgebundenen oder funkbasierten Datenübertragung von der mobilen Konfigurationsvorrichtung (14) an die externe Servervorrichtung (22) übertragenen Steuerungsdatensatz-Codeinformation (c5') bzw. zugeordneter Steuerungsdatensatz-Basisdaten (x5) sowie bevorzugt einer Information (M) zur Spezifizierung und/oder Identifizierung der Getränkezubereitungsvorrichtung, von den zugeordneten Steuerungsdatensatz-Basisdaten (x5) und zum drahtgebundenen oder funkbasierten Übertragen, bevorzugt initiiert durch die externe Servervorrichtung (22), der Steuerungsdatensatz-Basisdaten (x) an die, bevorzugt spezifizierte und/oder identifizierte, Getränkezubereitungsvorrichtung (5).

## Claims

1. Beverage preparation system with a beverage preparation device (5) and a mobile configuration device (14) provided separately from the beverage preparation device (5),
wherein the beverage preparation device (5), in particular configured as a capsule machine, includes:
preparation operating means (11,12) for preparing a beverage from a beverage base material, in particular received in a capsule (3),
a control data set memory (8) for storing beverages type-specific control data sets (s1, s2, s3, s5), also for subsequent beverage preferences, and providing a number of control data sets (s1, s2, s3) usable in a beverage preparation;
a control unit (6) for controlling the preparation operating means (11, 12) on the basis of one of the stored usable control data sets (s1, s2, s3, s5) during a preparation of a beverage; and
an interface and update unit (9) for wire- or radio-based receiving of control data set base data (x3, x4, x5) from the mobile configuration unit (14) and/or from an external server device (22) and for adding, on the basis of the received control data set base data (x3, x4, x5), a control data set (s3, s5) to be added to the number of control data sets (s1, s2, s3, s4, s5) provided in the control data set memory (8) usable in beverage preparation, and/or for updating, on the basis of the received control data set base data (x3, x4, x5), a control data set (s3, s4, s5) stored in the control data set memory (8) to be updated,
wherein the mobile configuration device (14) includes:
a code-means read-out unit (7) for the, in particular contact-free, reading of a code means (2) arranged on a, preferably external, code carrier unit (1), and for obtaining a control data set code information (c3, c5), to which to a control data set (s3, s5) for the beverage preparation device (5) to be added or to be updated, and corresponding control data set base data (x3, x5) from the read out code means (2) are assigned;
an interface unit (19, 20) for wire-or radio-based transmitting of the control data set base data (x3, x5) assigned to the obtained control data set code information (c3, c5) to the beverage preparation device (5), and/or for the wire- or radio-based data transmission with an external server device (22) for the purpose of a provision of the control data set base data (x5) assigned to the control data set code information (c) to the beverage preparation device (5), and
wherein respective beverage unit dispensing counters are operably provided in the beverage preparation device (5) and/or by means of a data communication with an external server unit (15, 22) for the usable control data sets provided in the control data set memory (8) of the beverage preparation device (5), and the interface- and updating unit (9) of the beverage preparation device (5) is configured to extract one beverage unit dispensing counter threshold value assigned to the control data set to be added or updated from the received control data set base data (x3, x5), and that the control unit (6) of the beverage preparation device (5) is configured to render the added or updated control data set unusable in the control data set memory (8) if the respective beverage unit dispensing counter reaches or exceeds the beverage unit dispensing counter threshold value.

2. Beverage preparation system according to Claim 1,
**characterized in that**
the interface and update unit (9) of the beverage preparation device (5) is configured for adding a control data set (S3, S5) to be added, on the basis of the received control data set base data (x3, x5), to the number provided in the control data set memory (8) of control data sets usable in beverage preparation, by making usable a control data set already stored in the control data set memory (8), but previously not usable for the preparation of a beverage, and/or by writing a usable control data set in the control data set memory (8).

3. Beverage preparation system according to claim 1 or 2,
**characterized in that**,
the interface and update unit (9) of the beverage preparation device (5) is further configured to extract the control data set (s3, s5) to be added or updated from the received control data set base data (x3, x5), and/or to generate the control data set (s3, s5) to be added or updated on the basis of the received control data set base data (x3, x5).

4. Beverage preparation system according to one of the preceding claims,
**characterized in that**,
the interface and update unit (9) of the beverage preparation device (5) is further configured to overwrite a control data set stored in the control data set memory (8) with a control data set to be added, on the basis of the received control data set base data (x3, x5).

5. Beverage preparation system according to one of the preceding claims,
**characterized in that**
the control data sets (s1, s2, s3, s4, s5) comprise respective variable-value data sets for operating parameters for the beverage preparation, in particular a temperature value, a pressure value, a liquid quantity value, a control sequence predetermined to the control unit, in particular consisting of sequential sequence steps of a moistening, a pausing, a brewing or a mixing, and a discharging or **in that** the control data sets represent respective program codes configured for a processing by the control unit (6), wherein the control unit (6) is then preferably configured so that, according to one processing of a program code representing a control data set, it can operate at least one pump of the preparation operating means (11,12) for the preparation of a beverage with a preferably time-variable phase angle or phase section control, and/or with a reduced, that is time-variably controlled voltage.

6. Beverage preparation system according to one of the preceding claims,
**characterized in that**
the beverage preparation device (5), further, according to a first alternative, comprises a capsule receiving unit (10) for receipt of a capsule (3), filled with a beverage base material, inserted in the beverage preparation device (5), a beverage-type code regulating unit for recognizing a beverage type assigned to the inserted capsule (3) on the basis of a capsule code means applied on/in the capsule (3), and for the selection, preferably free of user interaction, of the control data set assigned to the recognized beverage type for the preparation of a beverage from the inserted capsule (3), and particularly preferably, for the triggering of a start, free of user interaction of an operation of the preparation operating means (11, 12), or, according to a second alternative, in which the beverage preparation device is configured as a fully automatic model, the preparation operating means (11, 12) comprise a grinding unit controlled by a control unit (6), preferably on the basis of a control data set, for the grinding of a beverage base material inserted in the beverage preparation device, and a user interface for selecting a beverage type from the beverage types assigned to the number of control data sets usable in a beverage preparation.

7. Beverage preparation system according to one of the preceding claims,
**characterized in that**
the mobile configuration device (14) is configured for obtaining the control data set base data (x3, x5) assigned to acquired control data set code information (c3, c5) through a transforming of the acquired control data set code information into the control data set base information (x3, x5), and/or through a retrieval of a database provided in the mobile configuration device (14), on the basis of the acquired control data set code information, and/or a database (16) provided in an external server unit (15) for the wire- or radio-based data retrieval through the mobile configuration device (14).

8. Beverage preparation system according to one of the preceding claims,
**characterized in that**
it further comprises an external server unit (15, 22) with a database (16, 23), with control data set base data (x3, x5) stored therein for a wire- or radio-based data transmission, on the basis of an acquired control data set code information (c3, c5), to the mobile configuration device (14) and/or to the beverage preparation device (5).

9. Beverage preparation system according to one of the preceding claims
**characterized in that**,
it further comprises an external server unit (22) with a database (23) with control data set base data (x5) stored therein for a wire- or radio-based data transmission to the beverage preparation device (5), and **in that** the external server device (22) is configured for the provision of the assigned control data set base data, on the basis of a control data set code information (c5') or assigned control data set base data, preferably base data, as well as an information (M) for specifying and/or identifying of the beverage preparation device, transmitted by means of a wire- or radio-based data transmission from the mobile configuration device (14) to the external server unit (22), and for the wire- or radio-based transmission, preferably initiated through an external server unit (22), of the control data set base data to the preferably specified and identified beverage preparation device (5).

10. Beverage preparation system according to one of the preceding claims,
**characterized in that**
the code-means-adapted read out unit (7) of the mobile configuration device (14) is configured to evaluate the code means (2), which is configured as a, preferably two-dimensional, code pattern (2), which is one selected from the group of a barcode, a QR code, a data matrix code, a Semacode, an Aztec code, a Maxi code or an EZ-code or any combination of these codes, and/or **in that** the code-means-adapted read out unit (7) is configured to evaluate the code means (2) formed by a code-readable RFID transponder.

11. A method of extending a number of beverage types provided for preparing by a beverage preparation device (5) of a beverage preparation system, in particular according to one of claims 1 to 10, comprising the steps of:
reading-out of a code means (2) of a code carrier unit (1) by a mobile configuration device (14) of the beverage preparation system and obtaining control data set code information (c3, c5) from the read-out code means (2) which are assigned to a control data set (s3, s5) to be added or to be updated for the beverage preparation device (5) and corresponding control data set base data (x3, x5), by the mobile configuration device (14);
wire- or radio-based transmission of the control data set base data (x3, x5) assigned to the obtained control data set control information to the beverage preparation device (5), and/or effecting, by means of establishing a wire- or radio-based data transmission between the mobile configuration device (14) and an external server unit (22), a provision, by the external server unit (22) for the beverage preparation device, of the control data set base data (x5) assigned to the obtained control data set code information (c5), and wire- or radio-based transmission of the control data set base data (x5) from the external server unit (22) to the beverage preparation device (5);
receiving of the transmitted control data set base data (x3, x5) by the beverage preparation device (5) and adding, on the basis of the received control data set base date, of a control data set (s3, s5) to be added to the number provided by the beverage preparation device (5), of control data sets usable in a beverage preparation, and/or updating, on the basis of the received control data set base set (x3, x5) of a control data set (s3) to be updated, stored in the beverage preparation device (5);
operatively providing, for the usable control data sets provided in a control data set memory (8) of the beverage preparation device (5), of respective beverage unit dispensing counters in the beverage preparation device (5), and/or by means of a data communication with an external server unit (15, 22);
extracting, in an interface and updating unit (9) of the beverage preparation device (5), of a beverage unit dispensing counter threshold value assigned to the control data set to be added or to be updated from the received control data set base data (x3, x5);
updating, through a control unit (6) of the beverage preparation device (5), of a beverage unit dispensing counter for maintaining of a count of the beverages assigned to the added or updated control set, and produced by the beverage preparation device; and
rendering unusable, by the control unit (6) of the beverage preparation device (5), of the added or updated control data set in the control data set memory (8), if the respective beverage unit dispensing counter reaches or exceeds the beverage unit dispensing counter threshold value.

12. Method according to Claim 11,
**characterized by**
a further step for obtaining the control data set base data (x3) assigned to the acquired control data set code information (c3) through a transformation of the acquired control data set code information (c3) into the control data set base data (x3), and/or by a retrieval, on the basis of the acquired control data set code information, of a databank provided in the mobile configuration device (14) and/or a databank (16) provided by the mobile configuration device (14) for wire- or radio-based data retrieval in an external server unit (15).

13. Method according to claim 11 or 12,
**characterized by**
a further step for providing an external server unit (22) with a databank (23) with therein-stored control data set base data (x5) for a wire- or radio-based data transmission to the beverage preparation device (5), and a step for providing the assigned control data set base data (x5), through the external server unit (22), on the basis of a control data set code information (c5') or assigned control data set (x5) transmitted from the mobile configuration device (14) to the external server unit (22) by means of a wire- or radio-based data transmission, as well as preferably an information (M) for specification and/or identification of the beverage preparation device, and for the wire- or radio-based transmission, preferably initiated by the external server unit (22), of the control data set base information (x) to the, preferably specified and/or identified, beverage preparation device (5).

## Revendications

1. Système de préparation de boissons, avec un dispositif de préparation de boissons (5) et un dispositif de configuration (14) mobile, mis à disposition séparément du dispositif de préparation de boissons (5),
le dispositif de préparation de boissons (5) conçu notamment sous la forme d'une machine à capsules comprenant :
des équipements de préparation (11, 12) destinés à préparer une boisson à partir d'une matière de base pour boisson, réceptionnée notamment dans une capsule (3) ;
une mémoire d'ensembles de données de commande (8), destinée à mémoriser, également pour des distributions suivantes de boissons des ensembles de données de commande (s1, s2, s3, s5) spécifiques à la boisson et à mettre à disposition un nombre d'ensembles de données de commande (s1, s2, s3) utilisables lors d'une préparation de boissons ;
une unité de commande (6) destinée à commander les équipements de préparation (11, 12) sur la base de l'un des ensembles de données de commande (s1, s2, s3, s5) utilisables mémorisés, pendant une préparation d'une boisson ; et
une unité d'interface et de mise à jour (9), destinée à la réception filaire ou radio de données de base d'ensemble de données de commande (x3, x4, x5) de la part du dispositif de configuration (14) mobile et/ou d'un dispositif de serveur (22) externe et à l'ajout, sur la base des données de base d'ensemble de données de commande (x3, x4, x5) réceptionnées d'un ensemble de données de commande (s3, s5) à ajouter au nombre mis à disposition dans la mémoire d'ensembles de données de commande (8) d'ensembles de données de commande (s1, s2, s3, s4, s5) utilisables lors d'une préparation de boisson et/ou à la mise à jour, sur la base des données de base d'ensemble de données de commande (x3, x4, x5) réceptionnées d'un ensemble de données de commande (s3, s4, s5) devant être mis à jour, mémorisé dans la mémoire d'ensembles de données de commande (8),
le dispositif de configuration (14) mobile comprenant :
une unité de lecture de moyen codé (7), destinée à la lecture, notamment sans contact d'un moyen codé (2) rapporté sur un dispositif porteur codé (1), de préférence externe, et à obtenir une information codée d'ensemble de données de commande (c3, c5) à laquelle sont associés un ensemble de données de commande (s3, s5) à ajouter ou à mettre à jour pour le dispositif de préparation de boissons (5) et des données de base d'ensemble de données de commande (x3, x5) correspondantes, à partir du moyen codé (2) lu ;
une unité d'interface (19, 20), destinée à la transmission filaire ou radio au dispositif de préparation de boissons (5) des données de base d'ensemble de données de commande (x3, x5), associées à l'information codée d'ensemble de données de commande (c3, c5) obtenue et/ou à la transmission de données filaire ou radio avec un dispositif de serveur (22) externe, aux fins d'une mise à disposition pour le dispositif de préparation de boissons (5) des données de base d'ensemble de données de commande (x5) associées à l'information codée d'ensemble de données de commande (c) obtenue et
pour les ensembles de données de commande utilisables mis à disposition dans la mémoire d'ensembles de données de commande (8) du dispositif de préparation de boissons (5), des compteurs des distributions de boissons correspondants étant mis à disposition de manière fonctionnelle dans le dispositif de préparation de boissons (5) et/ou au moyen d'une communication de données avec un dispositif de serveur (15, 22) externe et l'unité d'interface et de mise à jour (9) du dispositif de préparation de boissons (5) étant conçue pour extraire une valeur limite de compteur des distributions de boissons associée à l'ensemble de données de commande à ajouter ou à mettre à jour, à partir des données de base d'ensemble de données de commande (x3, x5) réceptionnées, et que l'unité de commande (6) du dispositif de préparation de boissons (5) étant conçue pour rendre inutilisable l'ensemble de données de commande ajouté ou mis à jour dans la mémoire d'ensembles de données de commande (8), lorsque le compteur des distributions de boissons concerné atteint ou dépasse la valeur limite de compteur des distributions de boissons.

2. Système de préparation de boissons selon la revendication 1, **caractérisé en ce que**
l'unité d'interface et de mise à jour (9) du dispositif de préparation de boissons (5) est conçue pour l'ajout, sur la base des données de base d'ensemble de données de commande (x3, x5) réceptionnées, d'un ensemble de données de commande (s3, s5) devant être ajouté au nombre mis à disposition dans la mémoire d'ensembles de données de commande (8) d'ensembles de données de commande utilisables lors d'une préparation de boisson, en rendant utilisable un ensemble de données de commande déjà mémorisé dans la mémoire d'ensembles de données de commande (8), mais non utilisable précédemment pour la préparation d'une boisson et/ou en écrivant un ensemble de données de commande utilisable dans la mémoire d'ensembles de données de commande (8).

3. Système de préparation de boissons selon la revendication 1 ou 2,
**caractérisé en ce que**
l'unité d'interface et de mise à jour (9) du dispositif de préparation de boissons (5) est conçue en outre pour extraire l'ensemble de données de commande (s3, s5) à ajouter ou à mettre à jour hors des données de base d'ensemble de données de commande (x3, x5) réceptionnées et/ou pour générer l'ensemble de données de commande (s3, s5) à ajouter ou à mettre à jour sur la base des données de base d'ensemble de données de commande (x3, x5) réceptionnées.

4. Système de préparation de boissons selon l'une quelconque des revendications précédentes,
**caractérisé en ce que**
l'unité d'interface et de mise à jour (9) du dispositif de préparation de boissons (5) est conçu par ailleurs pour écraser, sur la base des données de base d'ensemble de données de commande (x3, x5) réceptionnées un ensemble de données de commande mémorisé dans la mémoire d'ensembles de données de commande (8) avec un ensemble de données de commande à ajouter.

5. Système de préparation de boissons selon l'une quelconque des revendications précédentes,
**caractérisé en ce que**
les ensembles de données de commande (s1, s2, s3, s4, s5) comprennent des ensembles de données de valeur variable correspondants pour des paramètres de service, notamment une valeur de température, une valeur de pression, une valeur de quantité de liquide d'une séquence de commande prédéfinie pour l'unité de commande, composée notamment d'étapes séquentielles successives d'une humidification, d'une pause, d'une infusion ou d'un mélange intime et d'une expulsion pour la préparation de boisson, ou **en ce que** les ensembles de données de commande représentent des codes programmes respectifs, conçus pour un traitement par l'unité de commande (6), de préférence l'unité de commande (6) étant alors conçue de telle sorte que conformément à un traitement d'un code programme représentant un ensemble de données de commande, elle puisse faire fonctionner au moins une pompe des équipements de préparation (11, 12) pour préparer une boissons avec une excitation de préférence variable dans le temps de découpage de phase ou de coupure de phase et/ou à tension réduite ou commandée en étant variable dans le temps.

6. Système de préparation de boissons selon l'une quelconque des revendications précédentes,
**caractérisé en ce que**
en outre, selon une première variante, le dispositif de préparation de boissons (5) comprend une unité réceptrice de capsule (10) destinée à recevoir une capsule (3) insérée dans le dispositif de préparation de boissons (5), remplie d'une matière de base pour boisson, une unité d'évaluation d'un code boisson, destinée à identifier un type de boisson associé à la capsule (3) insérée, sur la base d'un moyen codé de capsule rapporté sur/dans la capsule (3) et à sélectionner, de préférence sans interaction avec l'utilisateur, l'ensemble de données de commande associé au type de boisson identifié, pour une préparation d'une boisson à partir de la capsule (3) insérée et de manière particulièrement préférentielle, pour initier un démarrage sans interaction avec l'utilisateur d'un fonctionnement des équipements de préparation (11, 12) ou selon une deuxième variante, selon laquelle le dispositif de préparation de boissons est conçu de préférence en mode entièrement automatique, les équipements de préparation (11, 12) comprennent de préférence un moulin commandé par l'unité de commande (6), de préférence sur la base d'un ensemble de données de commande, destiné à moudre une matière de base pour boisson insérée dans le dispositif de préparation de boissons et une interface utilisateur, pour la sélection d'un type de boisson parmi les types de boissons associés au nombre d'ensembles de données de commande utilisables pour la préparation d'une boisson.

7. Système de préparation de boissons selon l'une quelconque des revendications précédentes,
**caractérisé en ce que**
le dispositif de configuration (14) mobile est conçu pour acquérir les données de base d'ensemble de données de commande (x3, x5) associées à l'information codée d'ensemble de données de commande (c3, c5) obtenue, par une transformation de l'information codée d'ensemble de données de commande obtenue en les données de base d'ensemble de données de commande (x3, x5) et/ou par une extraction, sur la base de l'information codée d'ensemble de données de commande obtenue d'une base de données mise à disposition dans le dispositif de configuration (14) mobile et/ou d'une base de données (16) mise à disposition dans un dispositif de serveur (15) externe pour l'interrogation de données filaire ou radio par le dispositif de configuration (14) mobile.

8. Système de préparation de boissons selon l'une quelconque des revendications précédentes
**caractérisé en ce**
**qu'**il comprend par ailleurs un dispositif de serveur (15, 22) externe avec une base de données (16, 23) avec des données de base d'ensemble de données de commande (x3, x5) qui y sont mémorisées, pour une transmission de données filaire ou radio au dispositif de configuration (14) mobile et/ou au dispositif de préparation de boissons (5), sur la base d'une information codée d'ensemble de données de commande (c3, c5) obtenue.

9. Système de préparation de boissons selon l'une quelconque des revendications précédentes,
**caractérisé en ce**
**qu'**il comprend par ailleurs un dispositif de serveur (22) externe avec une base de données (23) avec des données de base d'ensemble de données de commande (x5) qui y sont mémorisées, pour une transmission de données filaire ou radio au dispositif de préparation de boissons (5) et **en ce que** le dispositif de serveur (22) externe est conçu pour mettre à disposition, sur la base d'une information codée d'ensemble de données de commande (c5') transmise au moyen d'une transmission de données filaire ou radio du dispositif de configuration (14) mobile au dispositif de serveur (22) externe ou de données de base d'ensemble de données de commande associées et de préférence d'une information (M) pour la spécification et/ou pour l'identification du dispositif de préparation de boissons, des données de base d'ensemble de données de commande associées et pour la transmission filaire ou radio, initiée de préférence par le dispositif de serveur (22) externe, des données de base d'ensemble de données de commande au dispositif de préparation de boissons (5) de préférence spécifié et/ou identifié.

10. Système de préparation de boissons selon l'une quelconque des revendications précédentes,
**caractérisé en ce que**
l'unité de lecture de moyen codé (7) du dispositif de configuration (14) mobile est conçue pour évaluer le moyen codé (2), qui est conçu sous la forme d'un modèle codé (2), de préférence bidimensionnel qui est l'un du groupe d'un code-barres, d'un code QR, d'un code Datamatrix, d'un Semacode, d'un code Aztec, d'un MaxiCode ou d'un code EZ ou d'une association quelconque desdits codes et/ou **en ce que** l'unité de lecture d'informations codées (7) est conçue pour évaluer le moyen codé (2) conçu par un transpondeur RFID lisible par un code.

11. Procédé destiné à élargir un nombre de types de boissons mis à disposition pour la préparation par un dispositif de préparation de boissons (5) d'un système de préparation de boissons, notamment selon l'une quelconque des revendications 1 à 10, avec les étapes consistant :
à la lecture d'un moyen codé (2) d'un dispositif porteur codé (1) par un dispositif de configuration (14) mobile du système de préparation de boissons et à l'obtention d'une information codée d'ensemble de données de commande (c3, c5) à laquelle sont associés un ensemble de données de commande (s3, s5) à ajouter ou à mettre à jour pour le dispositif de préparation de boissons (5) et des données de base d'ensemble de données de commande (x3, x5) correspondantes, à partir du moyen codé (2) lu par le dispositif de configuration (14) mobile ;
la transmission filaire ou radio au dispositif de préparation de boissons (5) des données de base d'ensemble de données de commande (x3, x5) associées à l'information codée d'ensemble de données de commande obtenue et/ou au déclenchement, par établissement d'une transmission de données filaire ou radio entre le dispositif de configuration (14) mobile et un dispositif de serveur (22) externe d'une mise à disposition par le dispositif de serveur (22) externe pour le dispositif de préparation de boissons (5) des données de base d'ensemble de données de commande (x5) associées à l'information codée d'ensemble de données de commande (c5) obtenue et à la transmission filaire ou radio des données de base d'ensemble de données de commande (x5) du dispositif de serveur (22) externe au dispositif de préparation de boissons (5) ;
à la réception des données de base d'ensemble de données de commande (x3, x5) transmises par le dispositif de préparation de boissons (5) et à l'ajout, sur la base des données de base d'ensemble de données de commande réceptionnées d'un ensemble de données de commande (s3, s5) à ajouter au nombre mis à disposition par le dispositif de préparation de boissons (5) d'ensembles de données de commande utilisables lors de la préparation d'une boisson et/ou dans la mise à jour, sur la base des données de base d'ensemble de données de commande (x3, x5) réceptionnées, d'un ensemble de données de commande (s3) devant être mis à jour mémorisé dans le dispositif de préparation de boissons (5) ; à la mise à disposition fonctionnelle pour les ensembles de données de commande utilisables mis à disposition du dispositif de préparation de boissons (5) dans une mémoire d'ensembles de données de commande (8) de compteurs de distributions de boissons respectifs dans le dispositif de préparation de boissons (5) et/ou au moyen d'une communication de données avec un dispositif de serveur externe (15, 22) ;
à l'extraction, dans une unité d'interface et de mise à jour (9) du dispositif de préparation de boissons (5) d'une valeur limite de compteur des distributions de boissons associée à l'ensemble de données de commande devant être ajouté ou mis à jour, à partir des données de base d'ensemble de données de commande (x3, x5) réceptionnées ; à la mise à jour, par une unité de commande (6) du dispositif de préparation de boissons (5) d'un compteur des distributions de boissons pour le maintien d'un nombre des boissons associées à l'ensemble de données de commande ajouté ou mis à jour et produites par le dispositif de préparation de boissons ; et
à l'initiation de l'inutilisabilité par l'unité de commande (6) du dispositif de préparation de boissons (5), de l'ensemble de données de commande à ajouter ou à mettre à jour dans la mémoire d'ensembles de données de commande (8), lorsque le compteur des distributions de boissons concerné atteint ou dépasse la valeur limite de compteur des distributions de boissons.

12. Procédé selon la revendication 11,
**caractérisé par**
une étape supplémentaire pour l'acquisition des données de base d'ensemble de données de commande (x3) associées à l'information codée d'ensemble de données de commande (c3) obtenue par une transformation de l'information codée d'ensemble de données de commande (c3) obtenue en les données de base d'ensemble de données de commande (x3) et/ou par une extraction, sur la base de l'information codée d'ensemble de données de commande obtenue, d'une base de données mise à disposition dans le dispositif de configuration (14) mobile et/ou d'une base de données (16) mise à disposition dans un dispositif de serveur (15) externe, pour l'extraction de données filaire ou radio par le dispositif de configuration (14) mobile.

13. Procédé selon la revendication 11 ou 12,
**caractérisé par**
une étape supplémentaire destinée à prévoir un dispositif de serveur (22) externe avec une base de données (23) avec des données de base d'ensemble de données de commande (x5) qui y sont mémorisées, pour une transmission de données filaire ou radio au dispositif de préparation de boissons (5), et une étape de la mise à disposition par le dispositif de serveur (22) externe, sur la base d'une information codée d'ensemble de données de commande (c5') transmise au moyen d'une transmission de données filaire ou radio du dispositif de configuration (14) mobile au dispositif de serveur (22) externe ou de données de base d'ensemble de données de commande (x5) associées, ainsi que de préférence d'une information (M) pour la spécification et/ou l'identification du dispositif de préparation de boissons, des données de base de l'ensemble de données de commande (x5) associées et pour la transmission filaire ou radio, initiée de préférence par le dispositif de serveur (22) externe, des données de base d'ensemble de données de commande (x) au dispositif de préparation de boissons (5), de préférence spécifié et/ou identifié.
